# EUROPEAN PATENT APPLICATION

(11) **EP 4 246 307 A1**
(43) Date of publication of application: **20.09.2023**
(21) Application number: 21909153.5
(22) Date of filing: 08.12.2021
(51) Int. Cl.: G06F 3/14

(54) **DISTRIBUTED CROSS-DEVICE COLLABORATION METHOD, AND ELECTRONIC DEVICE AND COMMUNICATION SYSTEM**

(30) Priority: 24.12.2020 CN 202011553458
(71) Applicant: Huawei Technologies Co., Ltd., Shenzhen, Guangdong 518129 (CN)
(72) Inventor: YANG, Jianye, Shenzhen, Guangdong 518129 (CN); ZHU, Shuang, Shenzhen, Guangdong 518129 (CN)
(74) Representative: Pfenning, Meinig & Partner mbB
(86) International application number: PCT/CN2021/136482
(87) International publication number: WO 2022/135156

(57) **Abstract**

This application discloses a distributed cross-device collaboration method, an electronic device, and a communication system, and relates to the field of electronic technologies, to provide a distributed cross-device communication channel, so as to implement cross-device communication with high quality, high security, high compatibility, and high efficiency. In the solutions provided in this application, when there is a requirement for distributed collaboration, the first device may display first information that includes device information of a first device and application information of a first application, so that another device, for example, a second device, establishes, based on the first information, a communication channel for collaborative display with the first device, so as to implement cross-device communication with high efficiency and high efficiency based on the communication channel. In addition, application scenarios of distributed collaborative display can be enriched by establishing the communication channel, so as to implement cross-device communication with high compatibility, a low workload, and low difficulty, thereby expanding a distributed ecological scope and improving user experience.

## Description

This application claims priority to Chinese Patent Application No. 202011553458.1, filed with the China National Intellectual Property Administration on December 24, 2020 and entitled "DISTRIBUTED CROSS-DEVICE COLLABORATION METHOD, ELECTRONIC DEVICE, AND COMMUNICATION SYSTEM", which is incorporated herein by reference in its entirety.

### TECHNICAL FIELD

Embodiments of this application relate to the field of electronic technologies, and in particular, to a distributed cross-device collaboration method, an electronic device, and a communication system.

### BACKGROUND

With the development of application development technologies, a growing quantity of applications can support distributed collaborative control. For example, some game applications can be connected to a local area network. For example, a first device may be used as a gateway, and a second device and the first device are connected to a same gateway address. The first device and the second device each may be used as a game server, so as to play a multi-device online game.

However, in the foregoing distributed collaborative control method, a software developer needs to implement multi-device networking communication between game servers through software development with a huge workload. In addition, there is no unified communication channel for different local area network games, which results in a lack of consistent experience. Further, the developer cannot ensure quality or security of communication between the game servers.

### SUMMARY

Embodiments of this application provide a distributed cross-device collaboration method, an electronic device, and a communication system, to provide a cross-device distributed communication channel, so as to implement cross-device communication with high quality, high security, high compatibility, and high efficiency.

To achieve the foregoing objective, the following technical solutions are used in embodiments of this application.

According to a first aspect, a distributed cross-device collaboration method is provided, where the method includes: a first device displays first information when receiving a first operation of a user, where the first information includes device information of the first device and application information of a first application, and the application information of the first application is used by a second device to determine that the first application is installed on the second device; in response to receiving a channel establishment request of the second device, the first device establishes a communication channel for collaborative display with the second device, where the device information of the first device is used to perform security verification when the first device establishes the communication channel for collaborative display with the second device; and the first device collaboratively displays the first application with the second device by using the communication channel for collaborative display.

In the technical solution provided in the first aspect, when there is a requirement for distributed collaboration, the first device may display the first information that includes the device information of the first device and the application information of the first application, so that another device, for example, the second device, establishes a communication channel for collaborative display with the first device based on the first information, so as to implement highly efficient and highly secure cross-device communication based on the communication channel. In addition, application scenarios of distributed collaborative display can be enriched by establishing the communication channel, so as to implement cross-device communication with high compatibility, a low workload, and low difficulty, thereby expanding a distributed ecological scope and improving user experience.

In a possible implementation, the first operation includes an operation of triggering, by the user, display of a collaboration code, and the first device displays the first information in a form of the collaboration code. In an implementation of this application, the first device may display the first information in a form of the collaboration code in response to an operation of triggering the display of the collaboration code by the user, so that another device, for example, the second device, may obtain the first information by scanning the collaboration code.

In a possible implementation, the collaboration code includes a collaboration QR code and a collaboration barcode. A specific form of the collaboration code is not limited in this application. For example, the collaboration code may be a collaboration QR code or a collaboration barcode.

In a possible implementation, the application information of the first application is specifically used by the second device to determine that the first application of a first version is installed on the second device, and the first application of the first version supports an application router service, where supporting the application router service means having a capability of performing collaborative display by using the communication channel for collaborative display. Further, the application information of the first application displayed on the first device is specifically used by the second device to confirm that the first application of the first version that supports the application router service is installed on the second device, so that the second device can successfully establish the communication channel for collaborative display with the first device.

In a possible implementation, that the first device collaboratively displays the first application with the second device by using the communication channel for collaborative display includes: the first device synchronously displays an interface of the first application with the second device by using the communication channel for collaborative display. In an implementation scenario, the first device may synchronously display a same interface with the second device by using the communication channel for collaborative display, for example, synchronously display a game application interface.

In a possible implementation, that the first device collaboratively displays the first application with the second device by using the communication channel for collaborative display includes: the second device controls, by using the communication channel for collaborative display, the first device to display an application interface of the first application, where the first device displays the interface of the first application, and the second device displays a control interface of the first application. In an implementation scenario, the second device may control interface display on the first device by using the communication channel for collaborative display. For example, the first device displays a game application interface, and the second device displays a game control interface used to control the game application interface on the first device.

In a possible implementation, the first operation includes any one of the following: an operation of tapping, by the user, a virtual button that is on the interface of the first application and that is used to display a collaboration code; a preset pressing operation performed by the user on a physical button of the first device when the first device displays the interface of the first application; a preset gesture operation performed by the user on a touchscreen of the first device when the first device displays the interface of the first application; an operation of holding, by the user, the second device to "tap" the first device when the device displays the interface of the first application; an operation of holding, by the user, the second device to approach the first device when the first device displays the interface of the first application; and an operation of "shaking", by the user, the first device and the second device at the same time when the first device displays the interface of the first application. A specific form of the first operation used to trigger the first device to display the first information is not limited in this application.

According to a second aspect, a distributed cross-device collaboration method is provided, where the method includes: a second device obtains first information, where the first information includes device information of a first device and application information of a first application, and the first application runs on the first device; the second device determines that the first application is installed on the second device; the second device sends a channel establishment request to the first device based on the device information of the first device, to request to establish a communication channel for collaborative display with the first device; and the second device collaboratively displays the first application with the first device after the communication channel for collaborative display is successfully established.

In the technical solution provided in the second aspect, the second device may establish a communication channel for collaborative display with the first device based on the first information that includes the device information of the first device and the application information of the first application and that is obtained from the first device, so as to implement highly efficient and highly secure cross-device communication based on the communication channel. In addition, application scenarios of distributed collaborative display can be enriched by establishing the communication channel, so as to implement cross-device communication with high compatibility, a low workload, and low difficulty, thereby expanding a distributed ecological scope and improving user experience.

In a possible implementation, that a second device obtains first information includes: the second device obtains the first information by scanning a collaboration code displayed on the first device, where the collaboration code includes the first information; or the second device receives the first information from the first device. For example, the first device may display the first information in a form of the collaboration code, so that the second device may obtain the first information by scanning the collaboration code. Alternatively, the second device may directly receive the first information from the first device.

In a possible implementation, the application information of the first application is specifically used by the second device to determine that the first application of a first version is installed on the second device; and that the second device determines that the first application is installed on the second device specifically includes: the second device determines that the first application of the first version is installed on the second device, where the first application of the first version supports an application router service, where supporting the application router service means having a capability of performing collaborative display by using the communication channel for collaborative display. Further, the application information of the first application displayed on the first device is specifically used by the second device to confirm that the first application of the first version that supports the application router service is installed on the second device, so that the second device can successfully establish the communication channel for collaborative display with the first device.

In a possible implementation, that the second device collaboratively displays the first application with the first device includes: the first device synchronously displays an interface of the first application with the second device by using the communication channel for collaborative display. In an implementation scenario, the second device may synchronously display a same interface with the first device by using the communication channel for collaborative display, for example, synchronously display a game application interface.

In a possible implementation, that the second device collaboratively displays the first application with the first device includes: the second device controls, by using the communication channel for collaborative display, the first device to display an application interface of the first application, where the first device displays the interface of the first application, and the second device displays a control interface of the first application. In an implementation scenario, the second device may control interface display on the first device by using the communication channel for collaborative display. For example, the first device displays a game application interface, and the second device displays a game control interface used to control the game application interface on the first device.

According to a third aspect, a distributed cross-device collaboration method is provided, where the method includes: in response to receiving a first operation of a user, a first device obtains information about a distributed device; the first device determines a second device based on the information about the distributed device, where the second device is configured to collaboratively display a first application with the first device; the first device sends a push collaboration request to the second device, where the push collaboration request carries application information of the first application, and the application information of the first application is used by the second device to determine that the first application is installed on the second device; in response to receiving a channel establishment request of the second device, the first device and the second device establishes a communication channel for collaborative display; and the first device synchronously displays an interface of the first application with the second device by using the communication channel for collaborative display.

In the technical solution provided in the third aspect, when there is a requirement for distributed collaboration, the first device may send, to another device, for example, the second device, a push collaboration request that carries the application information of the first application, to request to establish the communication channel for collaborative display with the second device, so that highly efficient and highly secure cross-device communication can be implemented based on the communication channel. In addition, application scenarios of distributed collaborative display can be enriched by establishing the communication channel, so as to implement cross-device communication with high compatibility, a low workload, and low difficulty, thereby expanding a distributed ecological scope and improving user experience.

In a possible implementation, the distributed device includes one or more of the following: a device located in a same local area network as the first device, a device that establishes a Bluetooth or Wi-Fi Direct connection to the first device, a device that touches the first device, a device whose distance from the first device is less than a preset threshold, and a device that "shakes" with the first device at the same time. For example, in this application, the first device may discover one or more distributed devices based on a plurality of factors.

In a possible implementation, the second device is a device that is in the distributed devices and that touches the first device, a device that "shakes" with the first device at the same time, or a device closest to the first device. For example, in this application, the first device may determine, from a plurality of distributed devices according to a preset policy, the first device used to synchronously display the interface of the first application with the first device. This is not limited in this application.

In a possible implementation, that the first device determines a second device based on the information about the distributed device specifically includes: the first device determines the second device from the distributed devices based on the information about the distributed device with reference to one or more of the following information:
an illumination status of a screen of the distributed device; a distance between a plurality of distributed devices and the first device; and historical information of distributed collaboration of the second device. For example, in this application, the first device may determine, from a plurality of distributed devices according to a plurality of preset policies, the first device used to synchronously display the interface of the first application with the first device. This is not limited in this application.

In a possible implementation, the application information of the first application includes an earliest version of the first application that is expected by the first device, the first application information is specifically used by the second device to determine that the first application of the first version is installed on the second device, and the first application of the first version supports an application router service, where supporting the application router service means having a capability of performing collaborative display by using the communication channel for collaborative display. Further, the application information of the first application displayed on the first device is specifically used by the second device to confirm that the first application of the first version that supports the application router service is installed on the second device, so that the second device can successfully establish the communication channel for collaborative display with the first device.

In a possible implementation, the first operation includes any one of the following:
an operation of tapping, by the user, a virtual button for performing push collaboration on an interface of the first application; a preset pressing operation performed by the user on a physical button of the first device when the first device displays the interface of the first application; a preset gesture operation performed by the user on a touchscreen of the first device when the first device displays the interface of the first application; an operation of holding, by the user, the second device to "tap" the first device when the first device displays the interface of the first application; an operation of holding, by the user, the second device to approach the first device when the first device displays the interface of the first application; and an operation of "shaking", by the user, the first device and the second device at the same time when the first device displays the interface of the first application. A specific form of the first operation used to trigger the first device to perform push collaboration is not limited in this application.

According to a fourth aspect, a distributed cross-device collaboration method is provided, where the method includes: a second device receives a push collaboration request from a first device, where the push collaboration request carries application information of a first application, the first application runs on the first device, and the second device determines that the first application is installed on the second device; the second device sends a channel establishment request to the first device, where the channel establishment request is used to request to establish a communication channel for collaborative display with the first device; and after the communication channel for collaborative display is successfully established, the second device synchronously displays an interface of the first application with the first device by using the communication channel for collaborative display.

In the technical solution provided in the fourth aspect, the second device may establish the communication channel for collaborative display with the first device based on the push collaboration request that is received from the first device and that carries the application information of the first application, so as to implement highly efficient and highly secure cross-device communication based on the communication channel. In addition, application scenarios of distributed collaborative display can be enriched by establishing the communication channel, so as to implement cross-device communication with high compatibility, a low workload, and low difficulty, thereby expanding a distributed ecological scope and improving user experience.

In a possible implementation, the application information of the first application includes an earliest version of the first application that is expected by the first device, the first application information is specifically used by the second device to determine that the first application of the first version is installed on the second device, and the first application of the first version supports an application router service, where supporting the application router service means having a capability of performing collaborative display by using the communication channel for collaborative display. Further, the application information of the first application is specifically used by the second device to confirm that the first application of the first version that supports the application router service is installed on the second device, so that the second device can successfully establish the communication channel for collaborative display with the first device.

According to a fifth aspect, a first device is provided, where the first device includes: a display unit, configured to display first information when a first operation of a user is received, where the first information includes device information of the first device and application information of a first application, and the application information of the first application is used by a second device to determine that the first application is installed on the second device; and a transceiver unit, configured to receive a channel establishment request from the second device; the processing unit is configured to: in response to the channel establishment request of the second device received by the transceiver unit, establish a communication channel for collaborative display with the second device, where the device information of the first device is used to perform security verification when the first device establishes the communication channel for collaborative display with the second device. The display unit is further configured to collaboratively display the first application with the second device by using the communication channel for collaborative display.

In the technical solution provided in the fifth aspect, when there is a requirement for distributed collaboration, the first device may display the first information that includes the device information of the first device and the application information of the first application, so that another device, for example, the second device, establishes a communication channel for collaborative display with the first device based on the first information, so as to implement highly efficient and highly secure cross-device communication based on the communication channel. In addition, application scenarios of distributed collaborative display can be enriched by establishing the communication channel, so as to implement cross-device communication with high compatibility, a low workload, and low difficulty, thereby expanding a distributed ecological scope and improving user experience.

In a possible implementation, the first operation includes an operation of triggering, by the user, display of a collaboration code, and the display unit is specifically configured to display the first information in a form of the collaboration code. In an implementation of this application, the first device may display the first information in a form of the collaboration code in response to an operation of triggering the display of the collaboration code by the user, so that another device, for example, the second device, may obtain the first information by scanning the collaboration code.

In a possible implementation, the collaboration code includes a collaboration QR code and a collaboration barcode. A specific form of the collaboration code is not limited in this application. For example, the collaboration code may be a collaboration QR code or a collaboration barcode.

In a possible implementation, the application information of the first application is specifically used by the second device to determine that the first application of a first version is installed on the second device, and the first application of the first version supports an application router service, where supporting the application router service means having a capability of performing collaborative display by using the communication channel for collaborative display. Further, the application information of the first application displayed on the first device is specifically used by the second device to confirm that the first application of the first version that supports the application router service is installed on the second device, so that the second device can successfully establish the communication channel for collaborative display with the first device.

In a possible implementation, the display unit is specifically configured to synchronously display an interface of the first application with the second device. In an implementation scenario, the first device may synchronously display a same interface with the second device by using the communication channel for collaborative display, for example, synchronously display a game application interface.

In a possible implementation, the display unit is specifically configured to display an application interface of the first application under control of the second device. The first device displays an interface of the first application, and the second device displays a control interface of the first application. In an implementation scenario, the second device may control interface display on the first device by using the communication channel for collaborative display. For example, the first device displays a game application interface, and the second device displays a game control interface used to control the game application interface on the first device.

In a possible implementation, the first operation includes any one of the following: an operation of tapping, by the user, a virtual button that is on the interface of the first application and that is used to display a collaboration code; a preset pressing operation performed by the user on a physical button of the first device when the first device displays the interface of the first application; a preset gesture operation performed by the user on a touchscreen of the first device when the first device displays the interface of the first application; an operation of holding, by the user, the second device to "tap" the first device when the device displays the interface of the first application; an operation of holding, by the user, the second device to approach the first device when the first device displays the interface of the first application; and an operation of "shaking", by the user, the first device and the second device at the same time when the first device displays the interface of the first application. A specific form of the first operation used to trigger the first device to display the first information is not limited in this application.

According to a sixth aspect, a second device is provided, where the second device includes: an information obtaining unit, configured to obtain first information that includes device information of a first device and application information of a first application, where the first application runs on the first device; a processing unit, configured to determine that the first application is installed on the second device; and a transceiver unit, configured to send a channel establishment request to the first device based on the device information of the first device, to request to establish a communication channel for collaborative display with the first device; and a display unit, configured to collaboratively display the first application with the first device after the communication channel for collaborative display is successfully established.

In the technical solution provided in the sixth aspect, the second device may establish the communication channel for collaborative display with the first device based on the first information that is obtained from the first device and that includes the device information of the first device and the application information of the first application, so as to implement highly efficient and highly secure cross-device communication based on the communication channel. In addition, application scenarios of distributed collaborative display can be enriched by establishing the communication channel, so as to implement cross-device communication with high compatibility, a low workload, and low difficulty, thereby expanding a distributed ecological scope and improving user experience.

In a possible implementation, the information obtaining unit is specifically configured to: obtain the first information by scanning a collaboration code displayed on the first device, where the collaboration code includes the first information; or receive the first information from the first device by using the transceiver unit. For example, the first device may display the first information in a form of the collaboration code, so that the second device may obtain the first information by scanning the collaboration code. Alternatively, the second device may directly receive the first information from the first device.

In a possible implementation, the application information of the first application is specifically used by the second device to determine that the first application of the first version is installed on the second device; and the processing unit is specifically configured to determine that the first application of the first version is installed on the second device, where the first application of the first version supports an application router service, and supporting the application router service means having a capability of performing collaborative display by using a communication channel for collaborative display. Further, the application information of the first application displayed on the first device is specifically used by the second device to confirm that the first application of the first version that supports the application router service is installed on the second device, so that the second device can successfully establish the communication channel for collaborative display with the first device.

In a possible implementation, the display unit is specifically configured to synchronously display the interface of the first application with the first device by using the communication channel for collaborative display. In an implementation scenario, the second device may synchronously display a same interface with the first device by using the communication channel for collaborative display, for example, synchronously display a game application interface.

In a possible implementation, the display unit is specifically configured to display the control interface of the first application, so that the user controls, by performing an operation on the control interface of the first application and by using the communication channel for collaborative display, an application interface of the first application displayed on the first device. In an implementation scenario, the second device may control interface display on the first device by using the communication channel for collaborative display. For example, the first device displays a game application interface, and the second device displays a game control interface used to control the game application interface on the first device.

According to a seventh aspect, a first device is provided, where the first device includes: an information obtaining unit, configured to obtain information about a distributed device in response to receiving a first operation of a user; a processing unit, configured to determine a second device based on the information about the distributed device, where the second device is configured to collaboratively display a first application with the first device; a transceiver unit, configured to send, to the second device, a push collaboration request that carries application information of the first application; and receive a channel establishment request from the second device; a processing unit, configured to establish, in response to the channel establishment request of the second device received by the transceiver unit, a communication channel for collaborative display with the second device; and a display unit, configured to synchronously display an interface of the first application with the second device by using the communication channel for collaborative display. The application information of the first application is used by the second device to determine that the first application is installed on the second device.

In the technical solution provided in the seventh aspect, when there is a requirement for distributed collaboration, the first device may send, to another device, for example, the second device, a push collaboration request that carries the application information of the first application, to request to establish the communication channel for collaborative display with the second device, so that highly efficient and highly secure cross-device communication can be implemented based on the communication channel. In addition, application scenarios of distributed collaborative display can be enriched by establishing the communication channel, so as to implement cross-device communication with high compatibility, a low workload, and low difficulty, thereby expanding a distributed ecological scope and improving user experience.

In a possible implementation, the distributed device includes one or more of the following: a device located in a same local area network as the first device, a device that establishes a Bluetooth or Wi-Fi Direct connection to the first device, a device that touches the first device, a device whose distance from the first device is less than a preset threshold, and a device that "shakes" with the first device at the same time. For example, in this application, the first device may discover one or more distributed devices based on a plurality of factors.

In a possible implementation, the second device is a device that is in the distributed devices and that touches the first device, a device that "shakes" with the first device at the same time, or a device closest to the first device. For example, in this application, the first device may determine, from a plurality of distributed devices according to a preset policy, the first device used to synchronously display the interface of the first application with the first device. This is not limited in this application.

In a possible implementation, the processing unit is specifically configured to determine the second device from the distributed devices based on the information about the distributed device with reference to one or more of the following information: an illumination status of a screen of the distributed device; a distance between a plurality of distributed devices and the first device; and historical information of distributed collaboration of the second device. For example, in this application, the first device may determine, from a plurality of distributed devices according to a plurality of preset policies, the first device used to synchronously display the interface of the first application with the first device. This is not limited in this application.

In a possible implementation, the application information of the first application includes an earliest version of the first application that is expected by the first device, the first application information is specifically used by the second device to determine that the first application of the first version is installed on the second device, and the first application of the first version supports an application router service, where supporting the application router service means having a capability of performing collaborative display by using the communication channel for collaborative display. Further, the application information of the first application displayed on the first device is specifically used by the second device to confirm that the first application of the first version that supports the application router service is installed on the second device, so that the second device can successfully establish the communication channel for collaborative display with the first device.

In a possible implementation, the first operation includes any one of the following:
an operation of tapping, by the user, a virtual button for performing push collaboration on an interface of the first application; a preset pressing operation performed by the user on a physical button of the first device when the first device displays the interface of the first application; a preset gesture operation performed by the user on a touchscreen of the first device when the first device displays the interface of the first application; an operation of holding, by the user, the second device to "tap" the first device when the first device displays the interface of the first application; an operation of holding, by the user, the second device to approach the first device when the first device displays the interface of the first application; and an operation of "shaking", by the user, the first device and the second device at the same time when the first device displays the interface of the first application. A specific form of the first operation used to trigger the first device to perform push collaboration is not limited in this application.

According to an eighth aspect, a second device is provided, where the second device includes: a transceiver unit, configured to receive, from a first device, a push collaboration request that carries application information of a first application, where the first application runs on the first device; and a processing unit, configured to determine that the first application is installed on the second device, where the transceiver unit is further configured to send a channel establishment request to the first device, and the channel establishment request is used to request to establish a communication channel for collaborative display with the first device; and a display unit, configured to: after the communication channel for collaborative display is successfully established, synchronously display an interface of the first application with the first device by using the communication channel for collaborative display.

In the technical solution provided in the eighth aspect, the second device may establish the communication channel for collaborative display with the first device based on the push collaboration request that is received from the first device and that carries the application information of the first application, so as to implement highly efficient and highly secure cross-device communication based on the communication channel. In addition, application scenarios of distributed collaborative display can be enriched by establishing the communication channel, so as to implement cross-device communication with high compatibility, a low workload, and low difficulty, thereby expanding a distributed ecological scope and improving user experience.

In a possible implementation, the application information of the first application includes an earliest version of the first application that is expected by the first device, the first application information is specifically used by the second device to determine that the first application of the first version is installed on the second device, and the first application of the first version supports an application router service, where supporting the application router service means having a capability of performing collaborative display by using the communication channel for collaborative display. Further, the application information of the first application is specifically used by the second device to confirm that the first application of the first version that supports the application router service is installed on the second device, so that the second device can successfully establish the communication channel for collaborative display with the first device.

According to a ninth aspect, a first device is provided, where the first device includes: a memory, configured to store a computer program; a transceiver, configured to receive or send a radio signal; and a processor, configured to execute the computer program, so that the first device implements the method according to any one of the possible implementations of the first aspect or the third aspect.

According to a tenth aspect, a second device is provided, where the first device includes: a memory, configured to store a computer program; a transceiver, configured to receive or send a radio signal; and a processor, configured to execute the computer program, so that the second device implements the method according to any one of the possible implementations of the second aspect or the fourth aspect.

According to an eleventh aspect, a communication system is provided, where the communication system includes the first device according to any one of the possible implementations of the fifth aspect or the ninth aspect, and the second device according to any one of the possible implementations of the sixth aspect or the tenth aspect.

According to a twelfth aspect, a communication system is provided, where the communication system includes the first device according to any one of the possible implementations of the seventh aspect or the ninth aspect, and the second device according to any one of the possible implementations of the eighth aspect or the tenth aspect.

According to a thirteenth aspect, a computer-readable storage medium is provided, where the computer-readable storage medium stores computer program code; and when the computer program code is executed by a processor, the method according to any one of the possible implementations of the first aspect, the second aspect, the third aspect, or the fourth aspect is implemented.

According to a fourteenth aspect, a chip system is provided, where the chip system includes a processor and a memory; the memory stores computer program code; and when the computer program code is executed by the processor, the method according to any one of the possible implementations of the first aspect, the second aspect, the third aspect, or the fourth aspect is implemented. The chip system may include a chip, or may include a chip and another discrete component.

According to a fifteen aspect, a computer program product is provided, where when the computer program product runs on a computer, the method according to any one of the possible implementations of the first aspect, the second aspect, the third aspect, or the fourth aspect is implemented.

### BRIEF DESCRIPTION OF DRAWINGS

FIG. 1 is a schematic diagram of a hardware structure of an electronic device according to an embodiment of this application;
FIG. 2 is a diagram of a software system architecture of an electronic device according to an embodiment of this application;
FIG. 3 is a diagram of a framework of an application router service development kit according to an embodiment of this application;
FIG. 4 is a diagram of a framework of an application router service according to an embodiment of this application;
FIG. 5 is a schematic diagram of function implementation of a device networking module according to an embodiment of this application;
FIG. 6 is a schematic diagram of function implementation of a device management module according to an embodiment of this application;
FIG. 7 is a schematic diagram of function implementation of an access control module according to an embodiment of this application;
FIG. 8 is a flowchart of a distributed cross-device collaboration method according to an embodiment of this application;
FIG. 9A and FIG. 9B are a diagram of an example of displaying a collaboration QR code by an electronic device according to an embodiment of this application;
FIG. 10A and FIG. 10B are a diagram of an example of displaying a collaboration QR code by another electronic device according to an embodiment of this application;
FIG. 11 is a schematic diagram of a data flow direction in a distributed cross-device collaboration method according to an embodiment of this application;
FIG. 12 is an interaction diagram of a distributed cross-device collaboration method in a request collaboration scenario according to an embodiment of this application;
FIG. 13 is a flowchart of another distributed cross-device collaboration method according to an embodiment of this application;
FIG. 14A to FIG. 14D are a diagram of an example of a push collaboration scenario according to an embodiment of this application;
FIG. 15 is an interaction diagram of a distributed cross-device collaboration method in a push collaboration scenario according to an embodiment of this application; and
FIG. 16 is a block diagram of a structure of an electronic device according to an embodiment of this application.

### DESCRIPTION OF EMBODIMENTS

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

In the following, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, "a plurality of" means two or more unless otherwise specified.

An embodiment of this application provides a distributed cross-device collaboration method. The method may be applied to a multi-screen collaboration (multi-screen collaboration) scenario. The multi-screen collaboration means that a cross-device multi-screen collaboration interaction function is implemented between devices (for example, a first device and a second device) by using a communication channel that is established for collaborative display.

A specific multi-screen collaboration (multi-screen collaboration) scenario to which the distributed cross-device collaboration method is applied is not limited in this embodiment of this application.

In an example, the multi-screen collaboration scenario may be a multi-device collaboration game scenario. For example, both the first device and the second device may serve as a game server and a game control end, to implement cross-device online games by using the established communication channel. For another example, the first device and the second device may serve as a game server and a game control end, respectively, to implement cross-device collaborative game control by using the established communication channel.

In another example, the multi-screen collaboration scenario may be a multi-device collaborative photographing scenario. For example, the first device may directly invoke a camera of another device by using the established communication channel, to implement a multi-device multi-angle joint photographing function.

In another example, the multi-screen collaboration scenario may be a cross-device bullet screen comment posting scenario. For example, when a television program is being played on a large-screen device (for example, a television set), a family member may post a bullet screen comment, a comment, a message, or the like by using a communication channel established between a portable device (for example, a smartphone) and the large-screen device, so that the bullet screen comment, the comment, the message, or the like is synchronously displayed on the large-screen device.

In another example, the multi-screen collaboration scenario may be a scenario in which a plurality of devices collaboratively participate in an e-classroom. For example, a teacher may push, by using an established communication channel, a Word document, a PPT presentation, an Excel sheet, a video, or a picture displayed on a notebook computer to a smartphone of each student, so that the smartphone of each student may electronically display the Word document, the PPT presentation, the Excel sheet, the video, or the picture synchronously with the teacher's notebook computer.

In another example, the multi-screen collaboration scenario may be a multi-device collaborative lottery scenario. For example, an event organizer may push a lottery rule and a countdown on a first device (for example, a notebook computer) to a mobile phone of a guest at a conference site by using an established communication channel, so that the guest at the conference site may use a mobile phone of the guest to draw a lottery, view a lottery result, and the like.

In another example, the multi-screen collaboration scenario may be a scenario in which a plurality of devices collaboratively participate in a questionnaire survey. For example, an event organizer may push a questionnaire on the first device (for example, a notebook computer) to a mobile phone of a participant by using an established communication channel, so that the participant may use the mobile phone of the participant to answer the questionnaire and return a questionnaire result to the first device.

In another example, the multi-screen collaboration scenario may be a multi-device collaborative sound reception scenario. For example, the first device supporting a stereoscopic sound reception function may directly invoke a microphone of another device by using an established communication channel, to complete cross-device sound reception and converge the sound to the first device. In this way, a target volume, sound quality, and sound stereoscopicity are enhanced on the first device side by using a technology like beamforming.

In this embodiment of this application, the communication channel between devices is established based on a communication connection between the devices. The communication connection may be a wireless communication connection. For example, a wireless transmission protocol may be followed between the devices, and information is transmitted by using a wirelessly connected transceiver. The wireless transmission protocol may include but is not limited to a Bluetooth (Bluetooth, BT) transmission protocol, a Wireless Fidelity (wireless fidelity, Wi-Fi) transmission protocol, or the like. For example, the Wi-Fi transmission protocol may be a Wi-Fi P2P transmission protocol. The wirelessly connected transceiver includes but is not limited to a Bluetooth transceiver, a Wi-Fi transceiver, or the like. Information transmission between devices is implemented through wireless pairing. Information transmitted between the devices includes but is not limited to interface configuration information (such as a standard video stream), a control instruction, or the like.

Alternatively, in this embodiment of this application, the communication connection between the devices may be a wired communication connection. For example, a wired communication connection may be established between devices by using a video graphics array (video graphics array, VGA) adapter, a digital video interface (digital visual interface, DVI), a high definition multimedia interface (high definition multimedia interface, HDMI), a data transmission line, or the like. Information is transmitted between the devices by using an established wired communication connection. A specific connection manner between the devices is not limited in this application.

In this embodiment of this application, each of a plurality of electronic devices for multi-screen collaboration includes a display. For example, the plurality of electronic devices for multi-screen collaboration may include but are not limited to a smartphone, a netbook, a tablet computer, a smartwatch, a smart band, a phone watch, a smart camera, a palmtop computer, a personal computer (personal computer, PC), a personal digital assistant (personal digital assistant, PDA), a portable multimedia player (portable multimedia player, PMP), an augmented reality (augmented reality, AR) / virtual reality (virtual reality, VR) device, a television set, a projection device, a somatosensory game console in a human-computer interaction scenario, or the like. Alternatively, the plurality of electronic devices in distributed collaboration may be electronic devices of another type or structure. This is not limited in this application.

For example, in a multi-device collaborative game scenario, both the first device and the second device that establish a communication channel may be a smartphone (for example, a smartphone 1 and a smartphone 2), where the smartphone 1 and the smartphone 2 serve as both a game server and a game control end; and a cross-device online game may be implemented by using the smartphone 1 and the smartphone 2. Alternatively, the first device may be a notebook computer, and the second device may be a smartphone, where the notebook computer serves as a game server, and the smartphone serves as a game control end; and control of a game on the notebook computer may be implemented by using the smartphone.

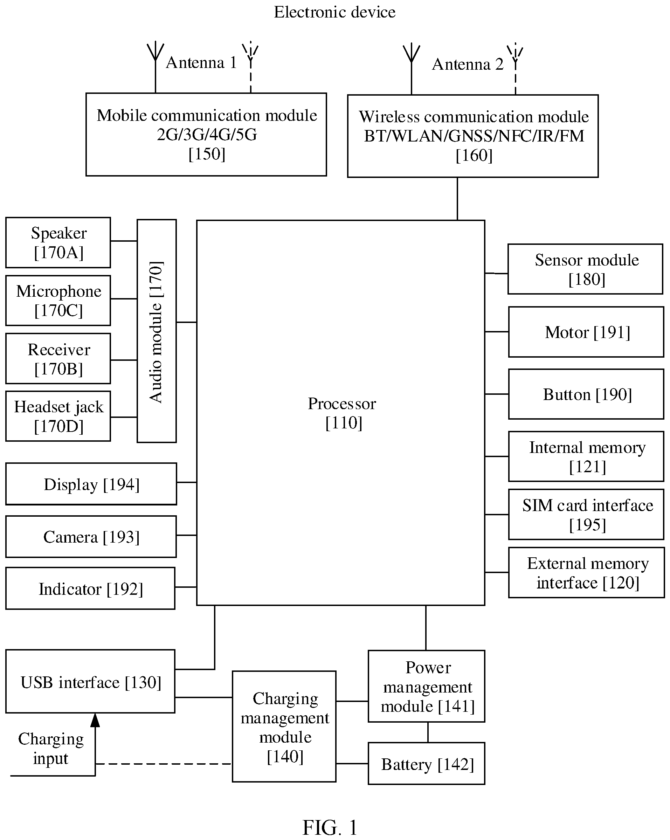

FIG. 1 is a schematic diagram of a hardware structure of an electronic device according to an embodiment of this application. As shown in FIG. 1, the electronic device may include a processor 110, a memory (including an external memory interface 120 and an internal memory 121), a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment of the present invention does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input from the wired charger through the USB port 130. In some embodiments of wireless charging, the charging management module 140 may receive a wireless charging input through a wireless charging coil of the electronic device. The charging management module 140 may further supply power to the electronic device by using the power management module 141 when the battery 142 is charged.

The power management module 141 is configured to connect to the battery 142, the charging management module 140, and the processor 110. The power management module 141 receives an input from the battery 142 and/or an input from the charging management module 140, and supplies power to the processor 110, the internal memory 121, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device may be configured to cover one or more communication bands. Different antennas may be multiplexed to improve antenna utilization. For example, the antenna 1 may be multiplexed as a diversity antenna in a wireless local area network. In some other embodiments, the antennas may be used in combination with a tuning switch.

The mobile communication module 150 may provide a solution to wireless communication such as 2G/3G/4G/5G applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low frequency baseband signal obtained through demodulation to the baseband processor for processing. After being processed by the baseband processor, the low frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device and that includes a Wi-Fi network, Bluetooth BT, a global navigation satellite system (global navigation satellite system, GNSS), frequency modulation (frequency modulation, FM), a short-distance wireless communication technology (near field communication, NFC), an infrared technology (infrared, IR), and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time-division code division multiple access, TD-SCDMA), Long Term Evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device may include one or N displays 194, where N is a positive integer greater than 1.

The electronic device may implement a photographing function by using the ISP, the camera 193, the video codec, the GPU, the display 194, the application processor, and the like.

The external memory interface 120 may be configured to connect to an external storage card, for example, a micro SD card, to extend a storage capability of the electronic device. The external memory card communicates with the processor 110 by using the external memory interface 120, to implement a data storage function. For example, files such as music and videos are stored in the external storage card.

The internal memory 121 may be configured to store computer-executable program code, where the executable program code includes instructions. The internal memory 121 may include a program storage area and a data storage area. The program storage area may store an operating system, an application required by at least one function (for example, a sound playing function or an image playing function), and the like. The data storage area may store data (such as audio data and a phone book) created when the electronic device is used, and the like. In addition, the internal memory 121 may include a high-speed random access memory, or may include a nonvolatile memory like at least one disk storage component, a flash memory component, or a universal flash storage (universal flash storage, UFS). The processor 110 runs the instructions stored in the internal memory 121 and/or the instructions stored in the memory disposed in the processor, to perform various function applications of the electronic device and data processing.

The electronic device may implement an audio function like music playing or recording by using the audio module 170, the speaker 170A, the receiver 170B, the microphone 170C, the application processor, and the like. For specific operating principles and functions of the audio module 170, the speaker 170A, the receiver 170B, and the microphone 170C, refer to descriptions in a conventional technology.

The button 190 includes a power button, a volume button, and the like. The button 190 may be a mechanical button, or may be a touch button. The electronic device may receive a button input, and generate a button signal input related to user settings and function control of the electronic device. The motor 191 may generate a vibration prompt. The motor 191 may be configured to provide an incoming call vibration prompt or a touch vibration feedback. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device. The electronic device may support one or N SIM card interfaces, where N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or of different types. The SIM card interface 195 is compatible to different types of SIM cards. The SIM card interface 195 may also be compatible with an external storage card. The electronic device interacts with a network by using the SIM card, to implement functions such as calling and data communication. In some embodiments, the electronic device uses an eSIM, that is, an embedded SIM card. The eSIM card may be embedded into the electronic device, and cannot be separated from the electronic device.

It should be noted that the hardware modules included in the electronic device shown in FIG. 1 are merely described as an example, and do not limit a specific structure of the electronic device. For example, the electronic device may further include another functional module.

In addition, a software system of the electronic device may use a layered architecture, an event-driven architecture, a microkernel architecture, a micro-service architecture, or a cloud architecture. For example, in this application, the operating system of the electronic device may include but is not limited to operating systems such as Symbian^{®} (Symbian), Android^{®} (Android), Windows^{®}, Apple^{®} (iOS), Blackberry^{®} (Blackberry), and Harmony (Harmony). This is not limited in this application.

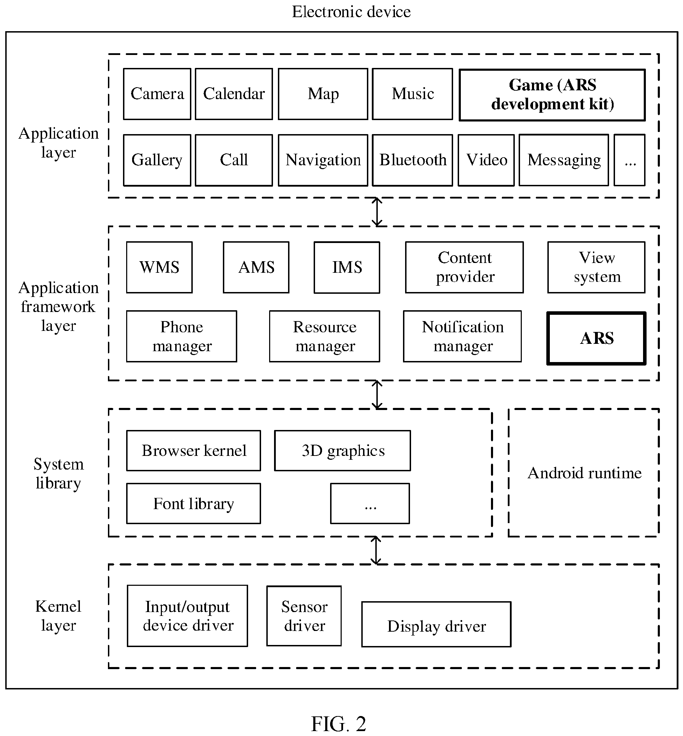

FIG. 2 is a diagram of a software system architecture of an electronic device according to an embodiment of this application by using an Android system including a layered architecture as an example. As shown in FIG. 2, the Android system of a layered architecture may include an application layer, an application framework layer, a system library, an Android runtime layer, and a kernel layer.

The application layer may include a series of application packages, for example, applications such as Camera, Gallery, Calendar, Call, Map, Navigation, Bluetooth, Music, Video, Messaging, and Game. For ease of description, an application program is briefly described as an application below. An application on an electronic device may be a native application (for example, an application installed on the electronic device when an operating system is installed on the portable device before the electronic device is delivered from a factory), or may be a third-party application (for example, an application downloaded and installed by a user from an application store). This is not limited in this embodiment of this application.

In this embodiment of this application, as shown in FIG. 2, an application router service (App Router Service, ARS) development kit (Kit) may be integrated into one or more applications included in the application layer. The ARS Kit may be used for collaborative display of an application interface, collaborative control of an application interface, or the like. This is not limited in this application. A game application in which an ARS Kit is integrated is used as an example in FIG. 2. If the electronic device is a game server, the ARS Kit is used for collaborative display of an application interface of the electronic device. If the electronic device is a game control end, the ARS Kit is used for collaborative control of an application interface of the electronic device.

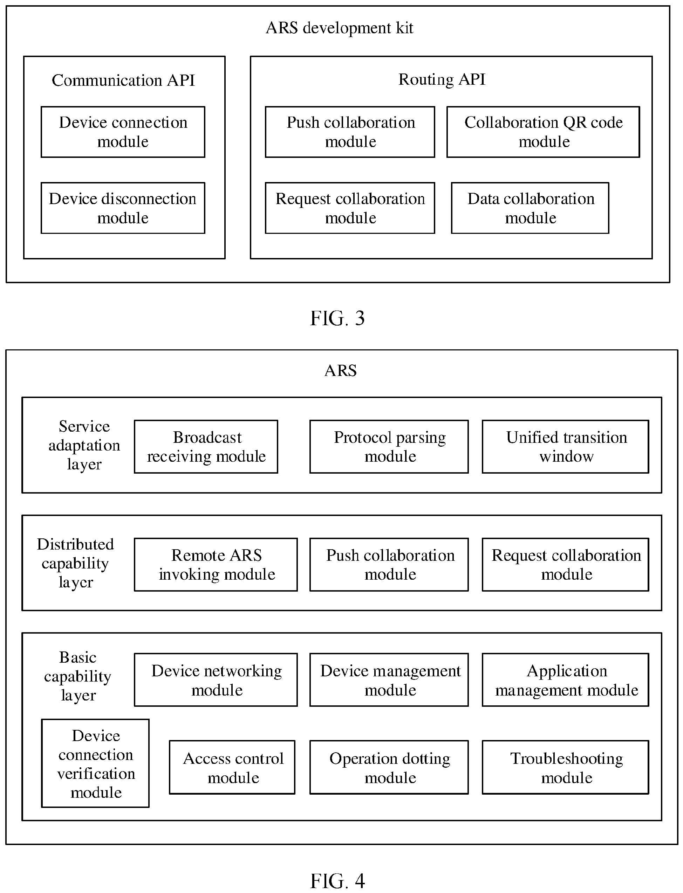

In some embodiments, the ARS Kit may be integrated into an application in a form of a support static package, and run in an application process, and is used to provide an interface for the application to implement an application routing capability. A specific structure of the ARS Kit is described in detail in the following description of FIG. 3.

The application framework layer provides an application programming interface (application programming interface, API) and a programming framework for an application at the application layer. As shown in FIG. 2, the application framework layer may include a window manager service (window manager service, WMS), an activity manager service (activity manager service, AMS), an input event manager service (input manager service, IMS), and an ARS. In some embodiments, as shown in FIG. 2, the application framework layer may further include a content provider, a view system, a phone manager, a resource manager, a notification manager, and the like.

The WMS carries data and attributes related to tan "interface", and is used to manage a status related to the "interface", for example, used to manage a window program and event dispatch. Managing a window program refers to sequentially outputting a display request of an application to a physical screen or another display device with assistance of an application server and a WMS. Event dispatch refers to a process of dispatching user events from a keyboard, a physical key, a touchscreen, a mouse, and a trackball (Trackball) to the corresponding controls or windows. The window manager service may be further used to obtain a size of a display, determine whether there is a status bar, perform screen locking, take a screenshot, and the like.

The AMS is used to manage activities, and is responsible for tasks such as startup, switching, and scheduling of each component in the system, and management and scheduling of the applications. Specifically, data classes used to store a process (Process), an activity (Activity), and a task (Task) are defined in the AMS. The data classroom corresponding to the process (Process) may include process file information, memory status information of the process, and an activity, a service, and the like included in the process. Activity information can be stored in ActivityStack. The ActivityStack is used to schedule application activities in a unified manner. The ActivityStack may specifically store information about all running activities (that is, final ArrayList mHistory), for example, interface configuration information. For example, the running activity can be saved in a new ArrayList. The ActivityStack can also store information about historical activities, such as interface configuration information. It should be noted that an activity does not correspond to an application, and the ActivityThread corresponds to an application. Therefore, that Android allows a plurality of applications to run at the same time actually means that Android allows a plurality of ActivityThreads to run at the same time.

In Android, the basic idea of activity scheduling is as follows: When an application process needs to start a new activity or stop a current activity, the application process reports to the AMS. The AMS records all application processes. When receiving a start or stop report, the AMS updates internal records and then instructs a corresponding client process to run or stop a specified activity. Because the AMS has records of all activities, the AMS can schedule these activities and automatically close the background activities based on statuses of activities and a system memory.

The IMS may be used to perform processing such as translation and packaging on an original input event, to obtain an input event including more information, and send the input event to the WMS. The WMS stores a tappable area (for example, a control) of each application, location information of a focus window, and the like. Therefore, the WMS can correctly distribute the input event to a specified control or focus window.

The ARS is used to implement device discovery and connection in a local area network, cross-device application linkage and collaboration, data communication and interaction between cross-device servers, and data communication and interaction between a control end and a server.

In some embodiments, the ARS may be a service that is started upon power-on and resident. In this embodiment of this application, the ARS may be integrated into a system service (SystemServer), and may be upgraded along with a read-only memory (read-only memory, ROM) and resident. A specific structure of the ARS is described in detail in the following description of FIG. 4.

The content provider is used to store and obtain data, and enable the data to be accessed by an application. The data may include a video, an image, audio, calls that are made and received, a browsing history and a bookmark, a phone book, and the like.

The view system includes visual controls such as a control for displaying a text and a control for displaying a picture. The view system may be used to construct an application. A display interface may include one or more views. For example, a display interface including a short message notification icon may include a text display view and a picture display view.

The phone manager is used to provide a communication function of the electronic device, for example, management of a call status (including answering, hanging up, or the like).

The resource manager provides various resources such as a localized character string, an icon, an image, a layout file, and a video file for an application.

The notification manager enables an application to display notification information in a status bar, and may be used to convey a notification message. The notification manager may automatically disappear after a short pause without requiring a user interaction. For example, the notification manager is used to notify download completion, provide a message notification, and the like. The notification manager may alternatively provide a notification that appears in a top status bar of the system in a form of a graph or a scroll bar text, for example, a notification of an application running on the background or a notification that appears on a screen in a form of a dialog window. For example, text information is prompted in the status bar, an alert sound is played, the electronic device vibrates, or the indicator light blinks.

The system library and Android runtime include a function that needs to be invoked by the application framework layer, an Android core library, and an Android virtual machine. The system library may include a plurality of functional modules, for example, a browser kernel, three-dimensional (3 dimensional, 3D) graphics, and a font library.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is used to manage a display subsystem, and provide fusion of 2D and 3D layers for a plurality of applications.

The media library supports playback and recording in a plurality of commonly used audio and video formats, static image files, and the like. The media library may support a plurality of audio and video encoding formats such as MPEG4, H.264, MP3, AAC, AMR, JPG, and PNG.

The three-dimensional graphics processing library is used to implement three-dimensional graphics drawing, image rendering, compositing, layer processing, and the like.

The 2D graphics engine is a drawing engine for 2D drawing.

The kernel layer is a layer between hardware and software. The kernel layer may include a display driver, an input/output device driver (for example, a driver for a keyboard, a touchscreen, a headset, a speaker, or a microphone), a camera driver, an audio driver, a sensor driver, and the like. A user performs an input operation by using an input device. The kernel layer may generate a corresponding original input event based on the input operation, and store the original input event in the device node.

In this application, the IMS may respond to the received input event. For example, the input/output device driver or the sensor driver may detect an input event of the user. For example, the input/output device driver reports, to the IMS, an input event corresponding to an operation of starting an application by a user, the IMS forwards the input event to the WMS, the WMS distributes the input event to a corresponding application, the application sends a registration request to the AMS, and the application is started. For another example, the sensor driver reports, to the IMS, an input event corresponding to a screen rotation request corresponding to an operation of rotating a display of the electronic device by the user. The IMS forwards the input event to the WMS, and the WMS distributes the input event to a corresponding application. The application sends the screen rotation request to the AMS, and an interface of the application completes landscape/portrait orientation switching.

It should be noted that FIG. 2 describes a schematic diagram of a software architecture of an electronic device by using only an Android system with a layered architecture as an example. A specific architecture of a software system of the electronic device is not limited in this application. For detailed descriptions of a software system of another architecture, refer to a conventional technology.

In the distributed cross-device collaboration method provided in this embodiment of this application, a router service (that is, an ARS) and a router service development kit (that is, an ARS Kit) (as shown in FIG. 2) may be integrated into a software system framework of an electronic device. Data exchange between servers or between a server and a control end is performed by using a communication channel that is provided by an ARS-related service and that is used for collaborative display between a plurality of devices. In this way, cross-device multi-screen collaborative interaction is quickly and simply implemented. For example, a large-screen device like a television set or a tablet computer is used as a game application interface display device, and a mobile phone is used as a game application control device, and a game interface displayed on the large-screen device like the television set or the tablet computer is controlled by using the mobile phone. In addition, a communication channel that is provided by an ARS-related service and that is used for collaborative display between a plurality of devices may be compatible with different multi-screen collaboration scenarios and different applications, thereby improving user experience, reducing difficulty in third-party access, and improving a distributed ecology.

FIG. 3 is a diagram of a framework of an application router service development kit according to an embodiment of this application. As shown in FIG. 3, the application router service development kit (that is, an ARS Kit) may include a communication API and a routing API.

The communication API may include a device connection module, a device disconnection module, and the like. For example, the device connection module may be configured to provide capabilities such as device discovery, device filtering, and device connection. The device disconnection module may be configured to provide capabilities such as device disconnection. In some embodiments, the communication API may be further configured to sense a behavior or an action of another device in a network. For example, the device connection module and the device disconnection module may be further configured to sense a screen status (for example, a screen is on or off) of another device or a network connection status.

The routing API may include a push collaboration module, a request collaboration module, a collaboration QR code module, a data collaboration module, and the like.

The push collaboration module is configured to support the electronic device in actively requesting another device to collaborate with the electronic device. For example, the push collaboration module of a device A is configured to support the device A in actively requesting a device B to collaboratively display an application interface displayed on the device A, where the device A may be referred to as a primary device, and the device B may be referred to as a secondary device.

The request collaboration module is configured to support the electronic device in requesting, through scanning, touching, or the like, collaboration with another device. For example, the push collaboration module of the device A is configured to support the device A in joining a game team corresponding to the QR code displayed on the device B by scanning a QR code used to join in a collaborative game on the device B, where the device A is a secondary device, and the device B is a primary device.

The collaboration QR code module may be configured to generate a collaboration QR code and parse the collaboration QR code, but is not limited thereto. For example, in a push collaboration process, the collaboration QR code generated by the routing API of the device A may be used by the device B to perform collaborative display with the device A through scanning. In a process of requesting collaboration, the routing API of the device A may parse a collaboration QR code that is from the device B and that is scanned by the device A, to obtain related information of the device B and an application on the device B, so as to establish a channel for collaborative display with the device B.

For example, the collaboration QR code may include information shown in Table 1.

**Table 1**

| Key | Type | Description | Information adder | Example |
|---|---|---|---|---|
| AS | String | ARS service feature code. HiVision distributes the code to the ARS based on this field during code scanning | ARS | AS=AppRouter |
| TP | String | ARS service feature code. HiVision distributes the code to the ARS based on this field during code scanning | ARS | TP=APP |
| ACT | int | ActionID, which is used by the ARS to differentiate service types. For example, if the value of this field is 0, this field is reserved for future service expansion. | ARS | ACT=0 |
| PKG | String | Expected application package name. The ARS reads the Binder and automatically sets this parameter. | ARS | PKG=com.wps.moffice |
| DID | String | Device ID (DeviceID) | ARS | DID=032238553434... |
| IP | String | Device IP Address | ARS | IP=x.x.x.x |
| PIN | String | Device connection authorization PIN | ARS | PIN=0357 |

In some embodiments, the collaboration QR code may include one or more of the following information shown in Table 2.

**Table 2**

| Key | Type | Description | Information adder | Example |
|---|---|---|---|---|
| ST | String | Expected activity name | Application developer | ST=com.wps.moffice .MeetingActivity |
| MV | long | Expected earliest application version | Application developer | MV=10101300 |
| EX | String | Application-defined startup parameter | Application developer | EX=xxxx |
| MAC | String | Device MAC address | ARS | MAC=01.02.03.04.05.06 |
| HID | String | Hash of the ID of the logged-in device | ARS | HID=xxxx |

The Hash (that is, HID) of the identifier (identifier, ID) of the logged-in device may obtain a string of data of a fixed length by performing a hash operation on the ID of the logged-in user of the device. The HID may be used as an identity feature, and is used for security verification, for example, used for user identity verification.

The data collaboration module may include direct interaction with an application, for example, to perform synchronous transmission of messages, objects, big data, and files. The data collaboration module may further include interaction with a lower-layer software structure (for example, the ARS), for example, to perform synchronous transmission of messages, objects, big data, and files.

In an example, as shown in FIG. 4, a diagram of a framework of an application router service provided in an embodiment of this application may include a service adaptation layer, a distributed capability layer, and a basic capability layer.

The service adaptation layer includes a broadcast receiving module, a protocol parsing module, and a unified transition window. In this embodiment of this application, the broadcast receiving module may be configured to receive a broadcast message. The protocol parsing module is configured to obtain protocols such as a unified wireless transmission protocol. The unified transition window is used to provide window mode management during collaborative display. For example, collaboration windows of different applications may use different menu bar modes during screen rendering. For example, the menu bar may include a maximize button, a minimize button, and a close window button.

The distributed capability layer may include a remote ARS invoking module, a push collaboration module, and a request collaboration module. In this embodiment of this application, the remote ARS invoking module is configured to invoke an application service to implement device collaboration. For example, device collaboration may be implemented by invoking an atomic ability service (atomic ability, AA) remote ARS. The push collaboration module is configured to collaborate with the ARS Kit, to provide a push collaboration capability to an application by using the push collaboration module of the ARS Kit. The request collaboration module is configured to collaborate with the ARS Kit, to provide a request collaboration capability for an application by using the request collaboration module of the ARS Kit.

The basic capability layer may include a device networking module, a device management module, an application management module, a device connection verification module, an access control module, an operation dotting module, a troubleshooting module, and the like.

In this embodiment of this application, the device networking module is also referred to as a "soft bus registration module", and is configured to register application routing information of the device during startup, and prepare for remote ARS invoking and device filtering.

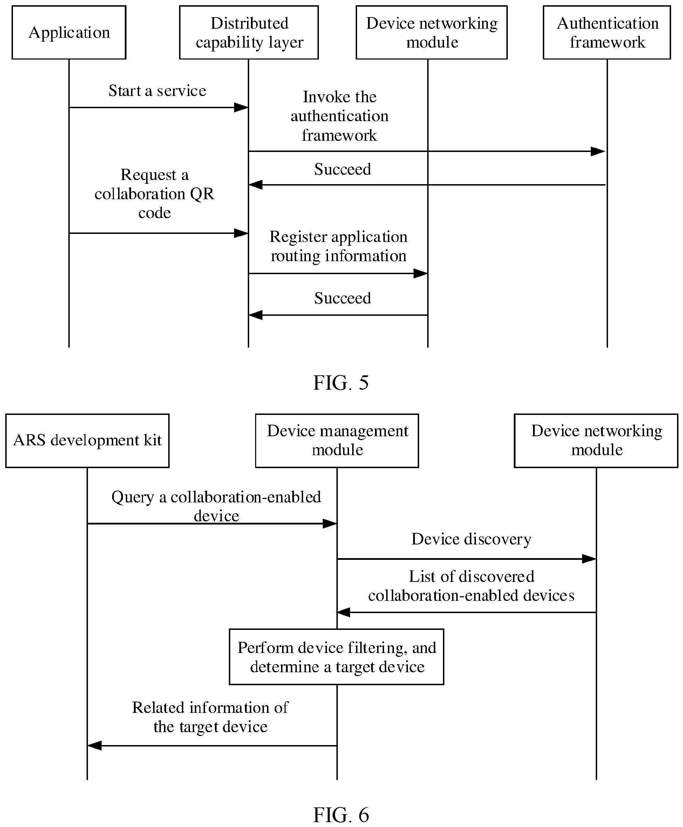

For example, requesting collaboration is used as an example. In this embodiment of this application, a function implemented by the device networking module may be embodied by using an interaction procedure shown in FIG. 5. As shown in FIG. 5, when an application has a collaboration service requirement, the application starts a service from the distributed capability layer (for example, the remote ARS invoking module). The distributed capability layer invokes the authentication framework to perform authentication. For example, the distributed capability layer indicates the authentication framework to initialize and perform application authentication. After the authentication framework is authenticated successfully, the application requests the collaboration QR code from the distributed capability layer (for example, the request collaboration module). In this case, the distributed capability layer registers the application routing information with the device networking module.

The device management module is configured to discover a device, query device registration information, and perform device filtering. For example, the device management module may perform device filtering based on the following information: a device type (for example, a device type is a smartphone or a tablet computer) and a device capability (for example, a device supports an ARS function). Whether the device can be discovered generally depends on whether the device has invoked an interface to register software and hardware information of the device with the device networking module by using a bottom-layer channel capability. When the screen of the device is off, the bottom-layer channel capability is usually disabled. Therefore, the device can be discovered only when the screen is on.

In this embodiment of this application, a function implemented by the device management module may be embodied by using an interaction procedure shown in FIG. 6. As shown in FIG. 6, in response to a query request initiated by an application (for example, a game application) for collaboration-enabled devices, an ARS Kit integrated in the application indicates a device management module to query the collaboration-enabled devices. For example, the device connection module in the communication API of the ARS Kit indicates the device management module to query the collaboration-enabled devices. The device management module initiates device discovery to the device networking module based on the indication of the ARS Kit for querying the collaboration-enabled devices. The device networking module queries the device registration information and returns a list of discovered collaboration-enabled devices to the device management module. The device management module filters the devices to determine a target device. The target device is an electronic device that performs application collaboration. Finally, the device management module sends related information (for example, a device ID) of the determined target device to the ARS Kit (for example, the device connection module in the ARS Kit), for performing a next device connection.

The application management module is configured to query, in a device collaboration process, whether a related application is installed on the secondary device. The application management module is further configured to: when it is determined that the related application is installed on the secondary device, query whether an application version installed on the secondary device matches an application version of the primary device, or query whether a version of the application installed on the secondary device supports an ARS (that is, whether an ARS Kit is integrated in the application). In some embodiments, if the related application is not installed on the secondary device, or the related application version installed on the secondary device does not match the application version of the primary device, or the application version installed on the secondary device does not support the ARS, the application management module triggers the secondary device to install the application of a specified version. For example, the application management module may trigger the secondary device to trigger to jump to an application market, to download and install (for example, automatic installation) the application of a specified version. For another example, the application management module may trigger application migration, so that the secondary device automatically downloads and installs the application of a specified version based on application migration of the primary device.

The device connection verification module is configured to provide security verification such as device verification. For example, the device connection verification module may provide a device verification code (for example, a PIN code), for example, PIN code information is hidden in a collaboration QR code, so that another device performs device verification when establishing a collaboration connection. For another example, the device connection verification module may be configured to verify a verification code of another device that is obtained by the device through scanning and that is used to establish a collaborative connection.

The access control module is configured to implement access control of an interface capability. In this embodiment of this application, an authentication framework development kit may be integrated in the access control module, and is used to verify, based on a comparison table between an application and a permission set that is maintained by a cloud, a permission of an application that invokes an interface capability, to ensure that the interface capability can be invoked only when the application has a related permission. In this embodiment of this application, the comparison table between the application and the permission set maintained in the cloud may be requested by the application developer to the developer alliance, to obtain the application ID and the related permission. For example, the comparison table between an application and a permission set may be periodically updated, for example, periodically updated based on an application package name and/or a certificate fingerprint.

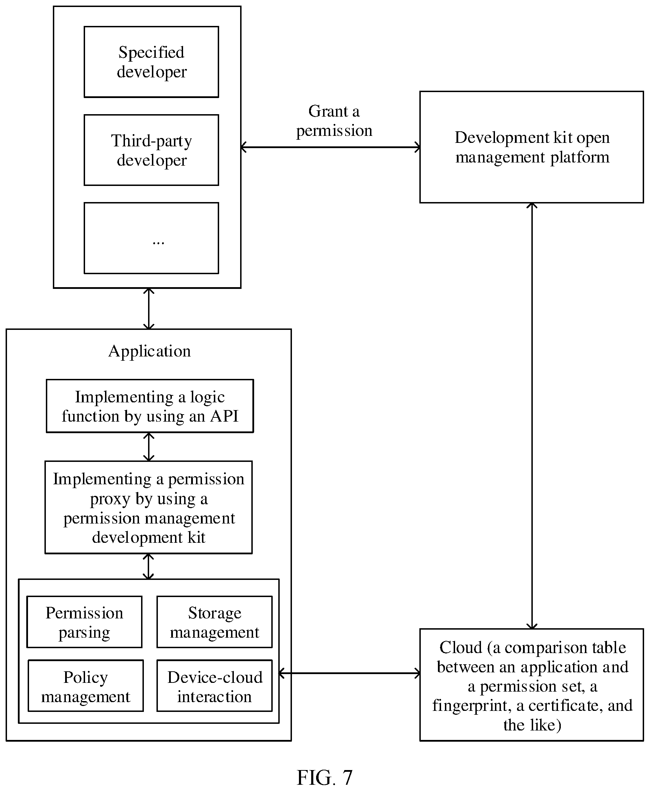

In this embodiment of this application, functions implemented by the access control module may be implemented by using an interaction procedure shown in FIG. 7. As shown in FIG. 7, a permission management kit is integrated in the access control module. An application may implement a permission proxy by using the permission management kit, including invoking a permission management service to perform device-cloud interaction, storage management, policy management, permission parsing, and the like. Device-cloud interaction refers to interaction between an application end and a cloud. The cloud maintains a comparison table between an application and a permission set. Specifically, as shown in FIG. 7, a developer (including a specific developer and a third-party developer) of an application having a collaboration capability may send application information to the Kit operation management platform to obtain authorization information such as a related permission and an application ID, and send the obtained permission information (including a certificate, a fingerprint, or the like) to the cloud for maintenance. The Kit open management platform can grant permissions to different types of application developers, including specific developers and third-party developers. For example, a specific developer may be a Huawei developer, a super developer, or a common developer.

The operation dotting module is configured to record and report big data dotting. For example, the big data may include information corresponding to a key operation behavior of a user or important internal information. The operation dotting module may report the foregoing data to a cloud server, to provide operation data of a distributed application for an application developer, so as to develop and/or optimize a corresponding function in a more targeted manner.

The troubleshooting module is configured to provide a unified exception code, so that an application developer can debug and quickly locate a problem, and the like.

The following describes in detail, with reference to the accompanying drawings, a distributed cross-device collaboration method provided in embodiments of this application. The following embodiments of this application are described by using an example in which a first device and a second device collaborate in a distributed manner, and the first device and the second device have a hardware structure shown in FIG. 1 and a software system architecture shown in FIG. 2.

In Embodiment 1 of this application, an example in which the second device requests collaboration from the first device is used to describe in detail a distributed cross-device collaboration method provided in embodiments of this application. In Embodiment 2 of this application, an example in which the second device performs push collaboration with the first device is used to describe in detail a distributed cross-device collaboration method provided in embodiments of this application.

### Embodiment 1

In Embodiment 1 of this application, it is assumed that a first application runs on the first device, and the second device requests collaboration from the first device, to synchronously display an interface of the first application with the first device or perform collaborative control on the interface of the first application.

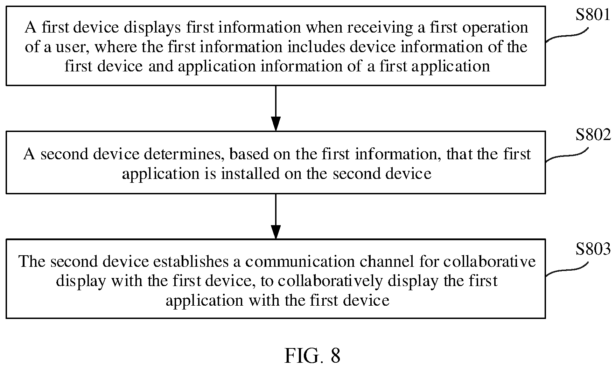

As shown in FIG. 8, a distributed cross-device collaboration method provided in an embodiment of this application may include the following steps S801 to S803.

S801: The first device displays first information when receiving a first operation of a user. The first information includes device information of the first device and application information of the first application.

The application information of the first application is used by the second device to determine that the first application is installed on the second device. The device information of the first device is used by the second device to perform security verification when the second device establishes a communication channel for collaborative display with the second device.

For example, the first information may include information similar to the information of the first device that is shown in Table 1, for example, an ARS service feature code, an ActionID, an application package name, a first device ID, a first device IP, and a connection authorization PIN of the first device.

Further, in some embodiments, the first information may further include one or more of information similar to the information of the first device that is shown in Table 2, for example, one or more of an activity name expected by the first device, an earliest application version expected by the first device, an application-defined startup parameter, a media access control (media access control, MAC) address of the first device, and a hash of a logged-in ID of the first device.

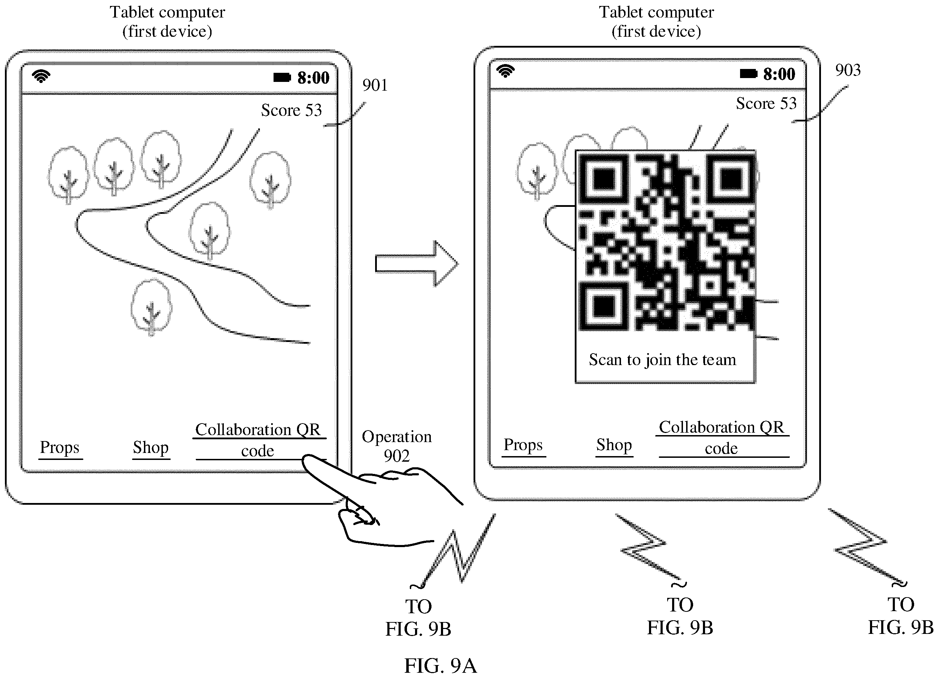

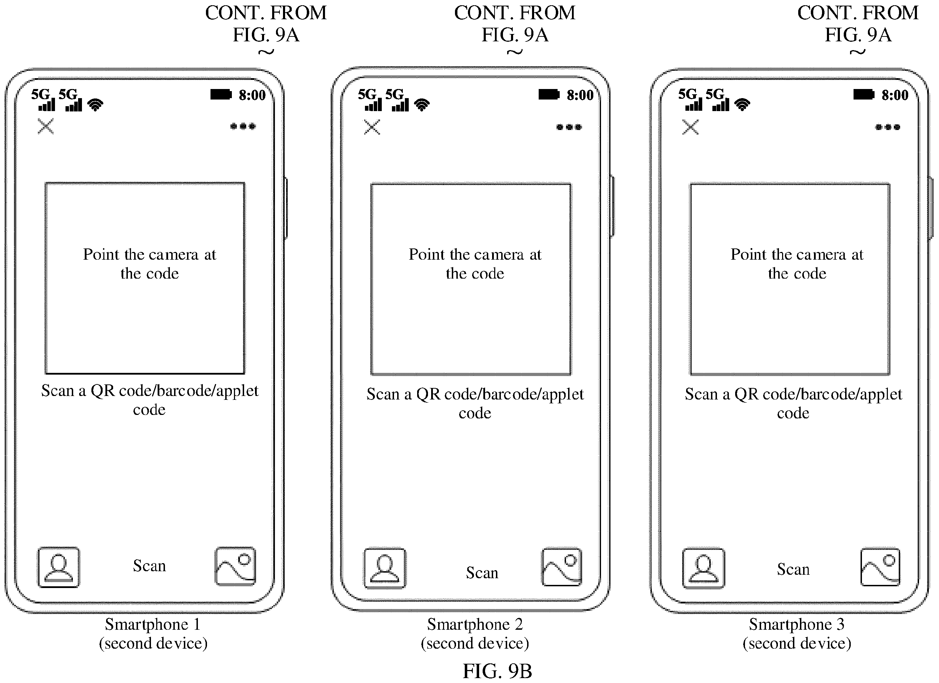

In some embodiments of this application, the first operation may include an operation of triggering, by the user, display of a collaboration code (for example, a collaboration QR code or a collaboration barcode). For example, the operation of triggering, by the user, display of the collaboration code may be an operation of tapping, by the user, a virtual button (for example, a "collaboration QR code" virtual button) on the interface of the first application; or a preset pressing operation (for example, an operation of pressing a power button and a volume up button at the same time) on a physical button of the first device when the first device displays the interface of the first application; or a preset gesture operation (for example, a "-", "∘", "∠", or " ^{L}" gesture) performed by the user on a touchscreen when the first device displays an interface of the first application; or an operation of holding, by the user the second device to "tap" the first device when the first device displays the interface of the first application; or an operation of holding, by the user, the second device to approach the first device when the first device displays the interface of the first application; or an operation of "shaking", by the user, the first device and the second device at the same time when the user displays the interface of the first application on the first device. A specific form of the operation is not limited in this application. For example, as shown in FIG. 9A and FIG. 9B, it is assumed that the second devices include a smartphone 1, a smartphone 2, and a smartphone 3, and the first device is a tablet computer; and it is assumed that a game application (that is, the first application is a game application) runs on the tablet computer (that is, the first device), and the first operation is an operation 902 of tapping, by the user, the "collaboration QR code" virtual button on the game application interface 901. In this case, the tablet computer displays an interface 903. The collaboration QR code on the interface 903 includes the first information determined by the tablet computer.

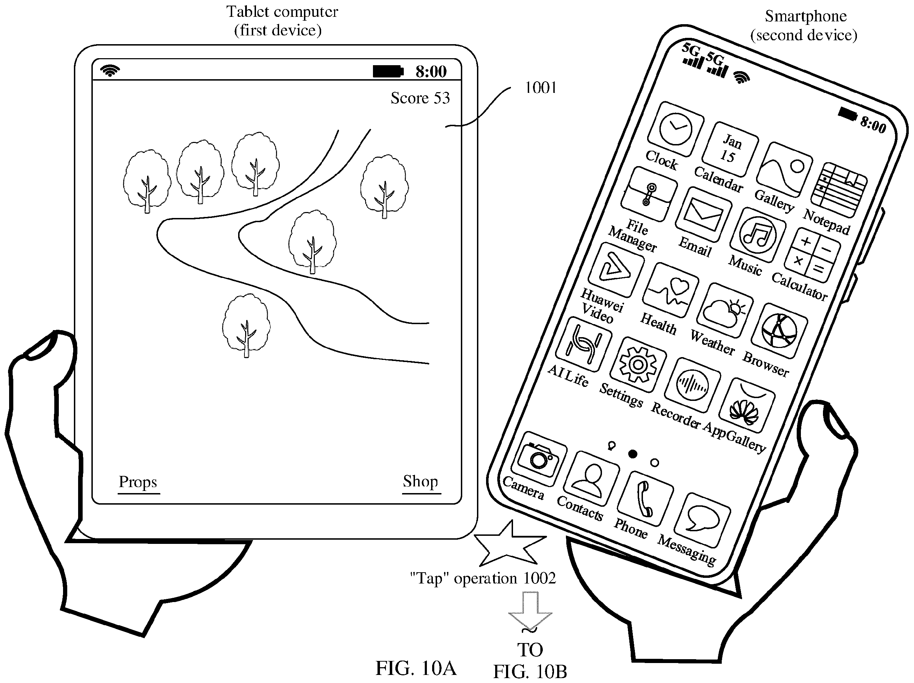

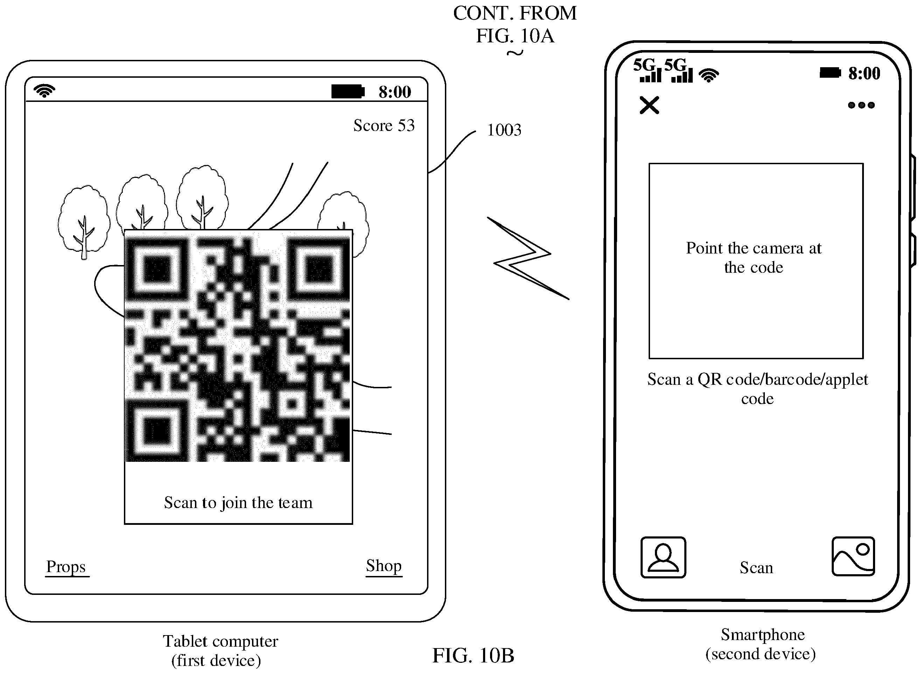

For another example, as shown in FIG. 10A and FIG. 10B, it is assumed that the second device is a smartphone, and the first device is a tablet computer; and it is assumed that a game application (that is, the first application is a game application) runs on the tablet computer (that is, the first device), and the first operation is an operation 1002 of holding, by the user, the smartphone to "tap" the tablet computer when the tablet computer displays the game application interface 1001. In this case, the tablet computer displays an interface 1003. The collaboration QR code on the interface 1003 includes the first information determined by the tablet computer.

It should be noted that in FIG. 10A and FIG. 10B, "tap" between one corner of the smartphone and one corner of the tablet computer is used as an example. In this embodiment of this application, "tap" may be performed between any part of the second device and any part of the second device.

In this embodiment of this application, the electronic device may collect a movement direction, a movement acceleration, and a movement speed of the electronic device in real time by using an acceleration sensor and/or a gravity sensor, to determine whether a "tap" operation occurs on the electronic device. For example, if the electronic device suddenly stops moving in a process of moving at a specific speed, the electronic device infers that the electronic device may touch another electronic device.

In some other embodiments, the electronic device may collect a rotation direction, a rotation angular velocity, a rotation angle, and the like of the electronic device in real time by using a gyroscope sensor, to determine whether a "tap" operation occurs on the electronic device. For example, if the electronic device suddenly stops moving in a process of moving at a specific rotational angular velocity, the electronic device infers that the electronic device may touch another electronic device.

In some other embodiments, the electronic device may analyze audio data collected by a microphone, to determine whether a "tap" operation occurs on the electronic device. For example, if the screen data received by the microphone meets a specific tone, a specific loudness, and a specific impact timbre, the electronic device infers that the electronic device may touch another electronic device. For a basis for determining, by the electronic device, whether the electronic device touches another electronic device, refer to a conventional technology. Details are not listed herein.

When the first operation is an operation of triggering, by the user, display of a collaboration code (for example, a collaboration QR code or a collaboration barcode), that the first device displays the first information means that the first device displays the first information in a form of the collaboration code (for example, the collaboration QR code or the collaboration barcode). Specifically, the first device may carry the first information in the collaboration code, so that another device, for example, the second device, obtains the first information when scanning the collaboration code. As shown in FIG. 9A and FIG. 9B, the smartphone 1, the smartphone 2, and the smartphone 3 join the game team by scanning the collaboration QR code on the interface 903. As shown in FIG. 10A and FIG. 10B, the smartphone joins the game team by scanning the collaboration QR code on the interface 1003.

It should be noted that, in the foregoing embodiment, the first information is displayed in a form of the QR code. In this embodiment of this application, the electronic device may further display the first information in a form of another identification code like a barcode. This is not limited in this application.

In some other embodiments of this application, when the first operation is an operation of holding the second device to "tap" the first device by the user when the first device displays the interface of the first application, an operation of "shaking", by the user, the first device and the second device at the same time, or an operation of holding the second device to approach the first device by the user, that the first device displays the first information may be replaced with: the first device sends the first information to the second device.

More specifically, the application information of the first application is specifically used by the second device to determine that the first application of a first version is installed on the second device.

S802: The second device determines, based on the first information, that the first application is installed on the second device.

For example, the second device may determine, based on the first information, that the first application of the first version is installed on the second device. The first version matches the application information of the first application.

That the first version matches the application information of the first application means that the first version can meet a requirement of the application version in the application information of the first application. More specifically, that the first version matches the application information of the first application means that the first application of the first version supports the application router service. Supporting the application router service means having a capability of performing collaborative display by using a communication channel for collaborative display. For example, it may be determined whether an ARS Kit is integrated into the first application installed on the second device, to determine whether the first application of the first version is installed on the second device.

It may be understood that if an application of an earlier version supports a capability, the application of a later version usually also supports the capability. Therefore, for example, the application information of the first application includes the earliest application version expected by the first device shown in Table 2. The first application of the first version may also be understood as a first application whose version is later than or equal to the earliest version expected by the first device.

For example, it is assumed that a game application runs on the first device (that is, the first application is a game application), and a version of the game application running on the first device is 10.0 (the version is included in the first information), and the second device obtains information about the second device, to determine whether the game application is installed on the second device.

In a possibility, the game application is not installed on the second device. In this case, the second device triggers downloading and installation of a game application whose version is equal to or later than 10.0, or the second device triggers downloading and installation of a game application in which the ARS Kit is integrated.

In another possibility, the game application is installed on the second device. In this case, the second device determines whether a version of the game application is equal to or later than 10.0, or determines whether the ARS Kit is integrated in the game application. If the version of the game application installed on the second device is equal to or later than 10.0 or the ARS Kit is integrated in the game application, the second device performs the following step S803. If the version of the game application installed on the second device is earlier than 10.0 and the ARS Kit is not integrated in the game application, the second device triggers downloading and installation of a game application in which the ARS Kit is integrated, for example, triggers downloading of a game application whose version is later than or equal to 10.0.

In some embodiments of this application, it is assumed that the second device obtains the first information by scanning the collaboration code. In this case, that the second device determines, based on the first information, that the first application of the first version is installed on the second device may specifically include the following two steps.

Step 1: The second device verifies and parses the scanned collaboration code to obtain the first information.

The second device verifies the collaboration code to ensure validity of the collaboration code. For a specific method for and process of verifying the collaboration code, refer to descriptions in a conventional technology. Details are not described herein.

Step 2: The second device determines, based on the obtained first information, that the first application of the first version is installed on the second device.

In some embodiments of this application, it is assumed that the second device directly receives the first information from the first device. In this case, that the second device determines, based on the obtained first information, that the first application of the first version is installed on the second device may specifically include: the second device determines, based on the received first information, that the first application of the first version is installed on the second device.

S803: The second device establishes a communication channel for collaborative display with the first device, to collaboratively display the first application with the first device.

For example, the first device and the second device have a software system architecture similar to that shown in FIG. 2, where the ARS kit has the structure shown in FIG. 3, and the ARS has the structure shown in FIG. 4. The communication channel for collaborative display that is established between the second device and the first device may be a channel between a device networking module of the second device and a device networking module of the first device.

In this embodiment of this application, the communication channel for collaborative display that is established between the second device and the first device may be specifically used to transmit collaborative display data, a control instruction, and the like.

In some embodiments, the second device may collaboratively display the first application with the first device in a manner of collaboratively displaying an application service interface, where the first device and the second device synchronously display the interface of the first application. For example, both the first device and the second device are used as game servers, and a game service interface is synchronously displayed on the first device and the second device. A user 1 may use the first device to play an online game with the second device used by a user 2.

For example, when the second device collaboratively displays the first application with the first device in a manner of collaboratively displaying an application service interface, the collaborative display data may include but is not limited to an application interface configuration parameter. The application interface configuration parameter may include but is not limited to a control (an icon, a text, or the like, and a specific display position and/or size of each icon, the text, and the like) displayed on the application interface. For details about the application interface configuration parameter, refer to a conventional technology. This is not limited in this application. The control instruction may be used for but is not limited to operation sharing between devices, so that the second device and the first device synchronously perform interface rendering and the like.

In some other embodiments, the second device may run the first application collaboratively with the first device in a manner of collaboratively displaying a control interface, where the first device displays the interface of the first application, and the second device displays a control interface of the first application. For example, the first device is used as a game server, and the second device is used as a game control end. The first device displays a game interface, and the second device displays a game control interface. The user may use the second device to control the game interface on the first device.

For example, when the second device collaboratively displays the first application with the first device in a manner of collaboratively displaying the application control interface, the second device may send game control information to the first device by using the communication channel in response to a control operation of the user, for example, control information used to move a cursor, control information used to select a virtual target indicated by a broadcast, and the like.

In this embodiment of this application, when the second device collaboratively displays the first application with the first device in a manner of collaboratively displaying the application control interface, in a possible implementation, the control interface displayed on the second device may be a specific application control interface. For example, the first device is used as a game server, and the second device is used as a game control end. The game control interface displayed on the second device may be a control interface that is developed by a game developer and matches a game application.

In another possible implementation, the control interface displayed on the second device may be a general control interface that is provided by a device software system and preset in the second device. The general control interface may meet a control requirement for interfaces of different applications (including an existing application, a newly developed application, and the like). For example, the general control interface may provide a standardized button (for example, an Xbox^{®} gamepad or a Logitech^{®} gamepad) with a function similar to a joystick or a button.

In some embodiments, the device software system may provide a plurality of key value mapping tables, and provide selection options for the user to select a key value mapping table. The key value mapping table is used to represent a correspondence between a key value and a control instruction on the general control interface.

In some embodiments, the device software system may further provide a self-defined key value mapping function, to customize a correspondence between a key value and a control instruction.

For example, refer to Table 3. Table 3 shows a game key value mapping table on a general control interface by using a game control instruction as an example.

**Table 3**

| Key value | Xbox^{®} instruction | Logitech^{®} instruction |
|---|---|---|
| 0 | A | X |
| 1 | B | A |
| 2 | X | B |
| 3 | Y | Y |
| 4 | LB | LB |
| 5 | RB | RB |
| 6 | start | LT |
| 7 | power | RT |
| 8 | cross key up | back |
| 9 | cross key down | start |
| 10 | cross key left | Button stick left |
| 11 | cross key right | Button stick right |
| 12 | back | N/A |

In this embodiment of this application, a key value mapping table may also be preset in an application. After receiving a key value from the second device, the first device may convert the received key value into a specific control instruction according to the key value mapping table by using an ARS Kit integrated in an application (for example, a game application), so as to make a corresponding response on an application interface (for example, a game application interface) according to the control instruction. For example, if the game key value received by the first device is "12", the first device determines, based on the key value, that the control instruction is "back", and then the second device returns to a previous-level game interface.

The following uses an example in which the first device and the second device have a software system architecture similar to that shown in FIG. 2, where the ARS kit has the structure shown in FIG. 3, and the ARS has the structure shown in FIG. 4, to describe in detail a specific interaction process of a distributed cross-device collaboration method provided in an embodiment of this application in a scenario in which the second device requests collaboration from the first device.

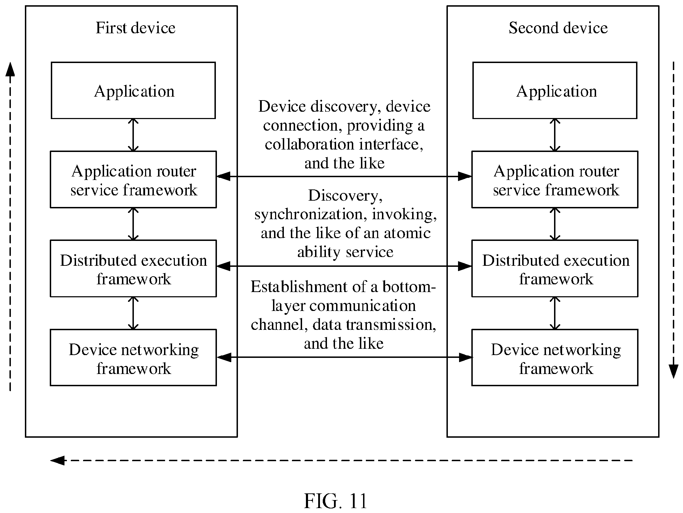

FIG. 11 is a schematic diagram of a data flow direction in a distributed cross-device collaboration method according to an embodiment of this application. As shown in FIG. 11, the distributed cross-device collaboration method provided in this embodiment of this application may be implemented by using an application router service framework, a distributed execution framework, and a device networking framework. The application router service framework is used to provide device discovery, a device connection, a collaboration interface, and the like for an application. The distributed execution framework is used to discover, synchronize, and invoke atomic ability services. A bottom layer is a device networking framework, and is used to establish a bottom-layer communication channel (that is, a communication channel for collaborative display), transmit data, and the like by using hardware such as Wi-Fi and Bluetooth. In some embodiments, to facilitate unified use and reduce dependency on bottom-layer implementation, all communication connection-related interfaces of the application router service framework are provided after lower-layer implementation is packaged in the device networking framework.

It is assumed that a game application runs on the first device. Based on the execution framework shown in FIG. 11, in response to the first operation of the user, the application invokes an interface of the ARS Kit to obtain a collaboration code string, and generate a collaboration code. For example, the collaboration code carries information such as a device ID and a device IP address that are required in Table 1, and an expected earliest application version that is required in Table 2. The device ID and the device IP address may be obtained, through querying, by the device networking framework (for example, the device networking module).

In response to an operation of scanning, by the user, the collaboration code on the first device by using the second device, the second device parses the collaboration code information to obtain network information such as a device name and a local area network IP address of the first device, and automatically connects to a same local area network. Then, the second device checks whether the first application included in the collaboration code exists (that is, whether the first application is installed) and whether a version matches (that is, whether the first application of the first version is installed). If the first application of the first version is not installed on the second device, the second device triggers downloading of the first application of the first version. In addition, the second device invokes an interface in a device networking framework (for example, a device networking module) to start a game control interface, and sends, to the first device, information indicating that the connection is successful. In this embodiment of this application, the second device may bind, to the distributed execution framework by using the interface of the application router service, the atomic ability service running on the first device. After receiving information indicating that the binding is successful, the first device completes establishment of the bottom-layer communication channel (that is, the communication channel for collaborative display).

After the second device and the first device complete establishment of the bottom-layer communication channel (that is, the communication channel for collaborative display), as shown in FIG. 11, the second device may send a data flow to the first device in an arrow direction shown in FIG. 11. If the first device establishes a bottom-layer communication channel for collaborative display (that is, a communication channel for collaborative display) with a plurality of second devices, the first device may receive data flows from the plurality of second devices at the same time.

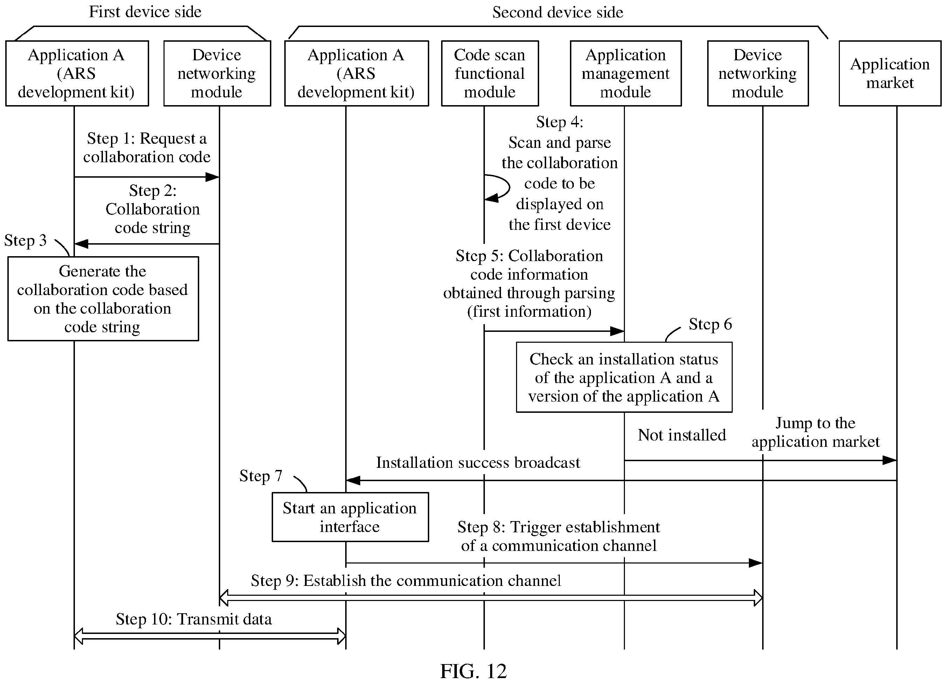

FIG. 12 is an interaction diagram of requesting collaboration according to an embodiment of this application. As shown in FIG. 12, in a collaboration request scenario, a distributed cross-device collaboration method provided in this embodiment of this application may specifically include the following step 1 to step 10.

Step 1: An ARS Kit of an application A on a first device requests a collaboration code from a device networking module of the first device.

Step 2: The device networking module of the first device returns a collaboration code string to the ARS Kit of the application A on the first device.

The collaboration code string may include first information. For example, the collaboration code string may include information such as a device ID and a device IP address that are required in Table 1, and an expected earliest application version that is required in Table 2.

Step 3: The ARS Kit of the application A on the first device generates a collaboration code based on the collaboration code string.

Because the collaboration code is generated based on the collaboration code string, the collaboration code carries the first information. Further, the first device may display the first information to a second device by displaying the collaboration code.

Step 4: The second device scans and parses, by using a code scanning functional module, the collaboration code displayed on the first device.

Parsing the collaboration code may include but is not limited to verifying validity of the collaboration code and obtaining the first information carried in the collaboration code.

Step 5: The second device sends the obtained collaboration code information (that is, the first information) to an application management module of the second device.

For example, in this embodiment of this application, the second device may connect to the ARS (more specifically, connect to the application management module) by starting an activity, to send the collaboration code information (that is, the first information) obtained through parsing to the application management module.

Step 6: The application management module of the second device checks an installation status of the application A and a version of the application A.

As described above, for example, the first information includes the earliest application version expected by the first device. Therefore, the application management module of the second device may check, based on the collaboration code information (that is, the first information) obtained through parsing, whether the application A is locally installed; and if the application A is installed, check whether a version of the application A meets the requirement for the earliest application version expected by the first device.

If the application A of the first version is not installed on the second device, after the application management module triggers downloading and installation of the application A of the first version, the following step 7 is performed. If the application A of the first version is installed on the second device, the following step 7 is directly performed.

Step 7: After the application A of the first version is installed on the second device, the application A on the second device starts an application interface.

The application A on the second device may determine, by listening to an application installation broadcast, whether the application A of the first version is installed.

Starting the application interface specifically means starting a specific page (Activity) of the application A.

Step 8: The application A on the second device indicates a device networking module of the second device to trigger establishment of a communication channel.

For example, the application A on the second device may trigger initialization of the data collaboration module, and indicates, by using a DEF interface, the device networking module of the second device to trigger establishment of the communication channel.

Step 9: The device networking module of the second device establishes the communication channel with the device networking module of the first device.

Step 10: The application A on the first device performs data transmission with the application A on the second device.

For example, the application A on the first device and the application A on the second device may be bound to a data collaboration module, to perform data transmission by using the established communication channel.

In the solution provided in Embodiment 1 of this application, the first device and the second device may be based on the software architecture shown in FIG. 2 or similar to that shown in FIG. 2. When there is a requirement for distributed collaboration, the cross-device communication channel between the second device and the first device is established by requesting collaboration, and highly efficient and highly secure cross-device communication can be implemented based on the communication channel. In addition, application scenarios of distributed collaborative display can be enriched by establishing the communication channel, so as to implement cross-device communication with high compatibility, a low workload, and low difficulty, thereby expanding a distributed ecological scope and improving user experience.

### Embodiment 2

In Embodiment 2 of this application, it is assumed that a first application runs on a first device, and the first device performs push collaboration with a second device, so that the second device and the first device synchronously display an interface of the first application.

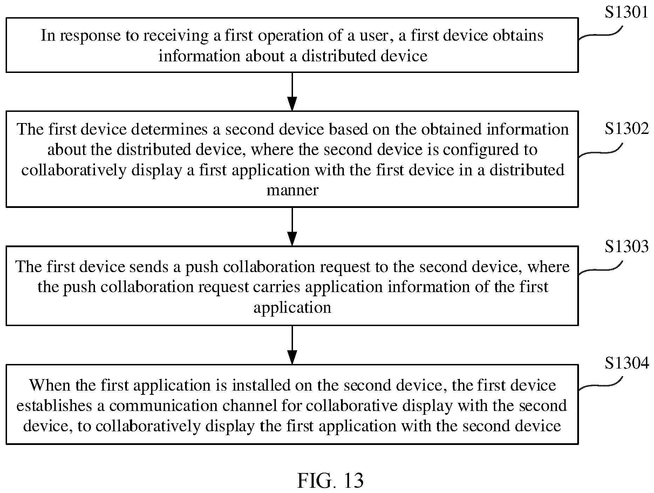

As shown in FIG. 13, a distributed cross-device collaboration method provided in an embodiment of this application may include the following steps S1301 to S1304.

S1301: In response to receiving a first operation of a user, the first device obtains information about a distributed device.

In some embodiments of this application, the first operation may include an operation of triggering push collaboration by the user. For example, the first operation may be an operation of tapping, by the user, a virtual button (for example, a "push collaboration" button) on the interface of the first application; or a preset pressing operation (for example, an operation of pressing a power button and a volume up button at the same time) on a physical button of the first device when the first device displays the interface of the first application; or a preset gesture operation (for example, a "-", "∘", "∠", or " ^{L}" gesture) performed by the user on a touchscreen when the first device displays an interface of the first application; or an operation of holding, by the user the second device to "tap" the first device when the first device displays the interface of the first application; or an operation of holding, by the user, the second device to approach the first device when the first device displays the interface of the first application; or an operation of "shaking", by the user, the first device and the second device at the same time when the user displays the interface of the first application on the first device. A specific form of the operation is not limited in this application.

The distributed device can synchronously display the interface of the first application with the first device. The distributed device may include, but is not limited to, a device that is located in a same local area network as the first device, a device that establishes a connection like a Bluetooth connection or a P2P Wi-Fi (Wi-Fi Direct) connection to the first device, a device that touches the first device, a device that is close to the first device (for example, with a distance less than a preset threshold), a device that "shakes" with the first device at the same time, or the like.

For example, if the first operation is an operation of tapping a virtual button on the interface of the first application by the user, a preset pressing operation performed by the user on a physical button of the first device when the first device displays the interface of the first application, or a preset gesture operation performed by the user on a touchscreen when the first device displays the interface of the first application, the distributed device may be a device that is located in a same local area network as the first device, a device that establishes a connection like a Bluetooth connection or a P2P Wi-Fi connection to the first device.

For another example, if the first operation is an operation of holding, by the user, the second device to "tap" the first device when the first device displays the interface of the first application, the distributed device may be a device that touches the first device.

For another example, if the first operation is an operation of holding, by the user, the second device to approach the first device when the first device displays the interface of the first application, the distributed device may be a device whose distance from the first device is less than a preset value.

For another example, if the first operation is an operation of "shaking", by the user, the first device and the second device at the same time when the first device displays the interface of the first application, the distributed device may be a device that "shakes" with the first device at the same time.

The information about the distributed device may be used to identify the distributed device. For example, the information about the distributed device may be an identifier (identification, ID) of the distributed device, or the like. This is not limited in this application.

S1302: The first device determines the second device based on the obtained information about the distributed device. The second device is configured to collaboratively display the first application with the first device in a distributed manner.

The first device may determine one or more second devices based on the obtained information about the distributed device.

It may be understood that, in the foregoing step S1301, one or more distributed devices are obtained by the first device.

In some embodiments, if one distributed device is obtained by the first device, the first device may determine that the distributed device is the second device. For example, the second device is a device that touches the first device. For another example, the second device is a device that "shakes" with the first device at the same time. For another example, the second device is a device closest to the first device.

In some other embodiments, if the first device obtains a plurality of distributed devices, for example, the distributed devices are a plurality of devices located in a same local area network with the first device, or a plurality of devices that establish connections such as Bluetooth and P2P Wi-Fi with the first device, the first device selects one or more distributed devices from a plurality of distributed devices, that is, one or more second devices.

For example, the first device may determine one or more second devices from a plurality of distributed devices based on one or more of the following information: illumination statuses of screens of a plurality of distributed devices, distances between the plurality of distributed devices and the first device, historical information of distributed collaboration of the second device, and the like. The historical information of distributed collaboration of the second device may include but is not limited to information about a device that collaborates with the second device in a distributed manner within a preset time period (for example, one week), a quantity of times of distributed collaboration, duration of distributed collaboration, or the like. A rule and a basis for determining the second device by the first device from the plurality of distributed devices are not limited in this application.

S 1303: The first device sends a push collaboration request to the second device. The push collaboration request carries the application information of the first application.

The application information of the first application is used by the second device to determine that the first application is installed on the second device.

For example, the push collaboration request carries the earliest version of the first application that is expected by the first device. The application information of the first application is specifically used by the second device to determine that the first application of the first version is installed on the second device. The first version matches the application information of the first application.

S1304: When the first application is installed on the second device, the first device establishes a communication channel for collaborative display with the second device, to collaboratively display the first application with the second device.

For example, when the first application that matches the application information of the first application is installed on the second device, that is, when the first application of the first version is installed on the second device, the first device may establish the communication channel for collaborative display with the second device, to collaboratively display the first application with the second device.

For example, the first device and the second device have a software system architecture similar to that shown in FIG. 2, where the ARS kit has the structure shown in FIG. 3, and the ARS has the structure shown in FIG. 4. The communication channel for collaborative display that is established between the first device and the second device may be a channel between a device networking module of the first device and a device networking module of the second device.

In Embodiment 2 of this application, the communication channel for collaborative display that is established by the first device and the second device may be specifically used to transmit collaborative display data and the like. The collaborative display data is used by the second device to collaboratively display the first application with the first device in a manner of synchronously displaying an application service interface. For example, the first device and the second device synchronously display the interface of the first application.

For example, when the second device collaboratively displays the first application with the first device in a manner of synchronously displaying an application service interface, the collaborative display data may include but is not limited to an application interface configuration parameter. The application interface configuration parameter may include but is not limited to a control (an icon, a text, or the like, and a specific display position and/or size of each icon, the text, and the like) displayed on the application interface. For details about the application interface configuration parameter, refer to a conventional technology. This is not limited in this application. The control instruction may be used for but is not limited to operation sharing between devices, so that the second device and the first device synchronously perform interface rendering and the like.

The first application that matches the version information of the first application is a first application that can meet a requirement for an application version in the version information of the first application. More specifically, the first application that matches the version information of the first application supports an application router service. Supporting the application router service means having a capability of performing collaborative display by using the communication channel for collaborative display. For example, it may be determined whether an ARS Kit is integrated into the first application installed on the second device, to determine whether the first application of the first version is installed on the second device.

It may be understood that if an application of an earlier version supports a capability, the application of a later version usually also supports the capability. Therefore, for example, the version information of the first application includes the earliest version of the first application that is expected by the first device. The first application of the first version may also be understood as a first application whose version is later than or equal to the earliest version expected by the first device.

For example, it is assumed that an e-classroom application runs on the first device (that is, the first application is the e-classroom application), where a version of the e-classroom application running on the first device is 10.0 (the version is carried in the push collaboration request), and the second device obtains information about the second device, to determine whether the e-classroom application is installed on the second device.

In a possibility, the e-classroom application is not installed on the second device. In this case, the second device triggers downloading and installation of an e-classroom application whose version is equal to or later than 10.0, or the second device triggers downloading and installation of an e-classroom application in which the ARS Kit is integrated.

In another possibility, the e-classroom application is installed on the second device. In this case, the second device determines whether a version of the e-classroom application is equal to or later than 10.0, or determines whether the ARS Kit is integrated in the e-classroom application. If the version of the e-classroom application installed on the second device is equal to or later than 10.0, or the ARS Kit is integrated in the e-classroom application, the second device determines that the first version matches the version information of the first application. If the version of the e-classroom application installed on the second device is earlier than 10.0 and the ARS Kit is not integrated in the e-classroom application, the second device triggers downloading and installation of an e-classroom application in which the ARS Kit is integrated, for example, triggers downloading of an e-classroom application whose version is later than or equal to 10.0.

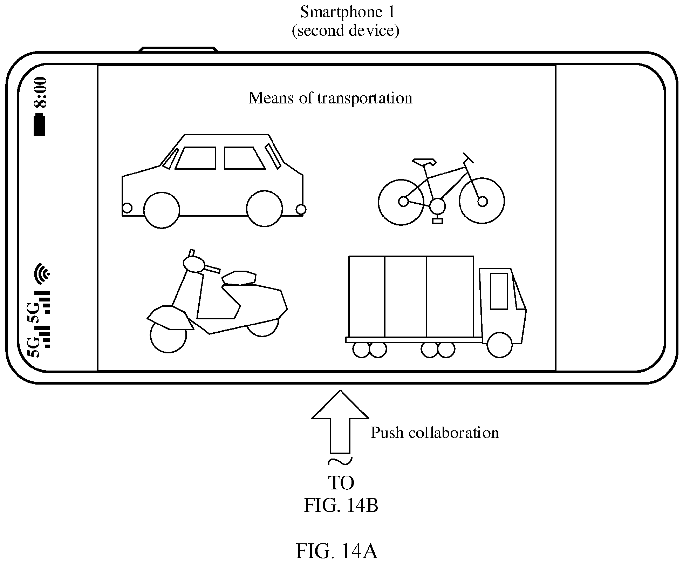

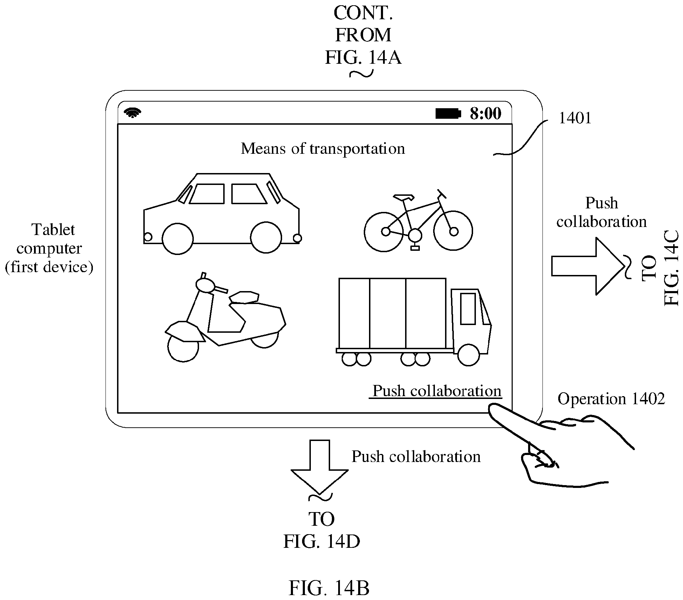

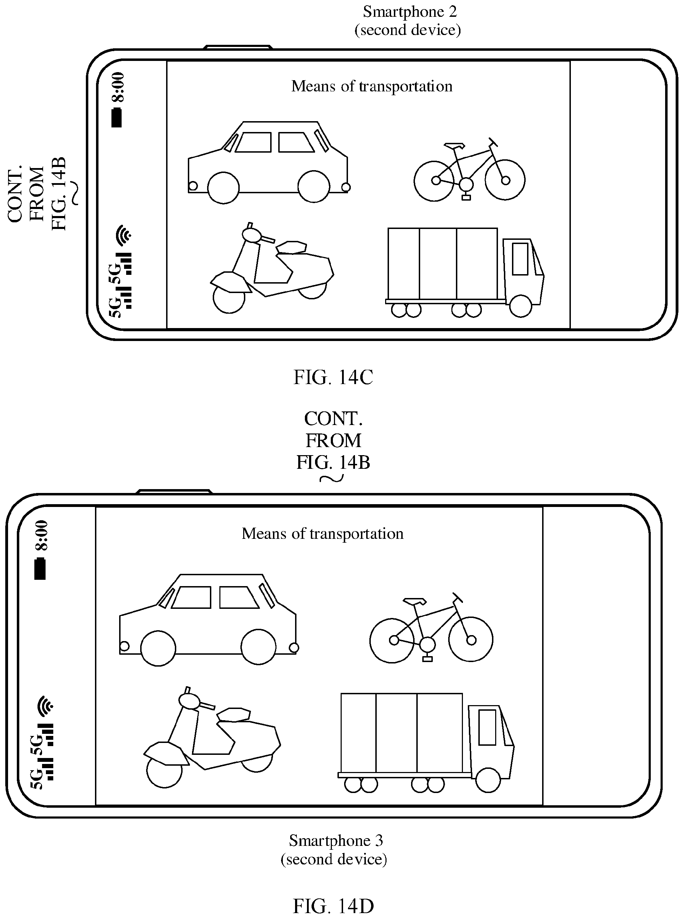

For example, refer to FIG. 14A to FIG. 14D. FIG. 14A to FIG. 14D show a push collaboration scenario according to an embodiment of this application. As shown in FIG. 14A to FIG. 14D, it is assumed that the second device is a smartphone 1, a smartphone 2, and a smartphone 3, and the first device is a tablet computer; and it is assumed that an e-classroom application (that is, the first application is an e-classroom application) runs on the tablet computer (that is, the first device), for example, a PPT presentation shown in FIG. 14A to FIG. 14D, and a first operation is an operation 1402 of tapping, by a user, a "push collaboration" virtual button on an e-classroom application interface 1401. In this case, the tablet computer pushes the e-classroom application interface 1401 to the smartphone 1, the smartphone 2, and the smartphone 3, to synchronously display the e-classroom application interface 1401 with the tablet computer.

It should be noted that, in FIG. 9A and FIG. 9B, that the first operation is an operation of tapping, by the user, a virtual button is used as an example. For a first operation in another form, for example, an operation of holding, by the user, the second device to "tap" the first device, an operation of "shaking", by the user, the first device and the second device at the same time, or an operation of holding, by the user, the second device to approach the first device, refer to the descriptions in Embodiment 1. Details are not described herein again.

For the push collaboration described in Embodiment 2, the distributed cross-device collaboration method may be implemented by using the application router service framework, the distributed execution framework, and the device networking framework shown in FIG. 11. After the second device and the first device complete establishment of a bottom-layer communication channel (that is, a communication channel for collaborative display), the second device may send a data flow to the first device by using an arrow direction shown in FIG. 11. If the first device establishes communication channels for collaborative display with a plurality of second devices, the first device may receive data flows from the plurality of second devices at the same time. For this part of content, refer to the descriptions of FIG. 11 in Embodiment 1. Details are not described herein again.

The following uses an example in which the first device and the second device have a software system architecture similar to that shown in FIG. 2, where the ARS kit has the structure shown in FIG. 3, and the ARS has the structure shown in FIG. 4, to describe in detail a specific interaction process of a distributed cross-device collaboration method provided in an embodiment of this application in a scenario in which the first device performs push collaboration with the second device.

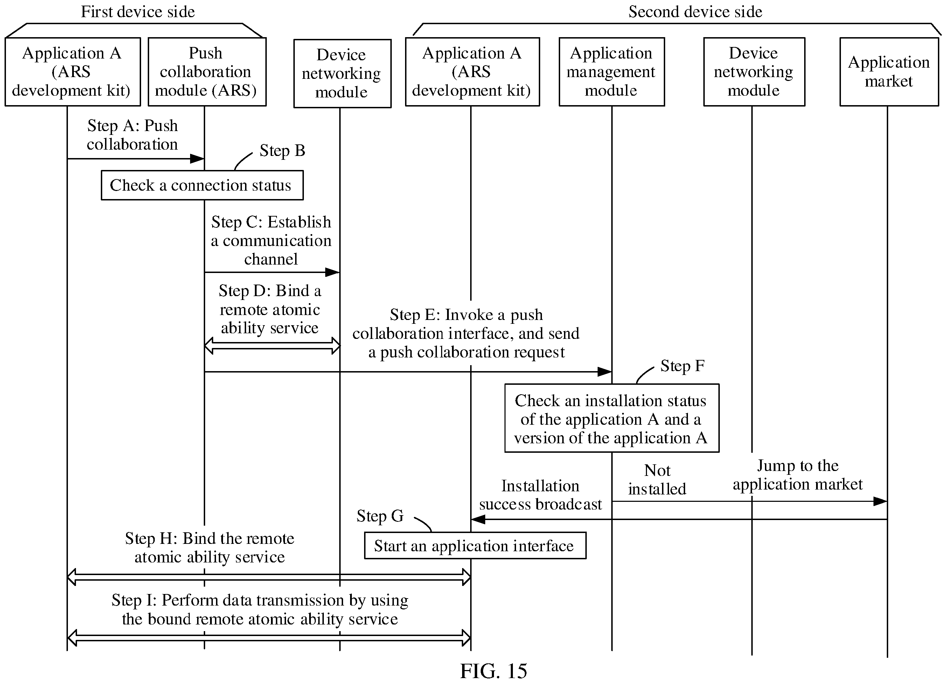

FIG. 15 is an interaction diagram of push collaboration according to an embodiment of this application. As shown in FIG. 15, in a push collaboration scenario, the distributed cross-device collaboration method provided in this embodiment of this application may specifically include the following step A to step I.

Step A: An application A on the first device indicates push collaboration to a push collaboration module of an ARS on the first device by using the ARS Kit.

For example, the push collaboration module of the ARS Kit integrated in the application A on the first device indicates push collaboration to the push collaboration module of the ARS on the first device.

Step B: The push collaboration module of the ARS on the first device checks a connection status.

If no device establishes a communication channel for distributed collaboration with the first device, the following step C is performed; or if a device has established a communication channel for distributed collaboration with the first device, the first device directly pushes the interface of the application A to the device by using the established communication channel.

Step C: The push collaboration module of the ARS on the first device indicates the device networking module of the ARS on the first device to establish a communication channel.

Step D: The push collaboration module of the ARS on the first device binds a remote atomic ability (atomic ability, AA) service with the device networking module of the ARS on the first device.

In this embodiment of this application, service logic of an application may be decoupled, and divided into atomic abilities that can work independently on any device. Based on different atomic abilities, cross-device migration can be implemented based on the distributed infrastructure. Each atomic ability may implement a program function. In addition, the interfaces can be opened to developers and directly invoked by the system or another system. In addition, different atomic abilities may support flexible assembly to form an application interface, for example, the first interface in this embodiment of this application.

Step E: The push collaboration module of the ARS on the first device invokes a push collaboration interface to send a push collaboration request to an application management module of the second device.

The push collaboration request carries version information of the application A. For example, the push collaboration request carries the earliest version of the application A expected by the first device.

Step F: In response to receiving the push collaboration request, the application management module of the second device checks an installation status of the application A and a version of the application A.

As described above, for example, the push collaboration request carries the earliest application version expected by the first device. Therefore, the application management module of the second device may check, based on the received push collaboration request, whether the application A is locally installed; and if the application A is installed, check whether a version of the application A meets the requirement for the earliest application version expected by the first device.

If the application A of the first version is not installed on the second device, after the application management module triggers downloading and installation of the application A of the first version, the following step G is performed. If the application A of the first version is installed on the second device, the following step G is directly performed.

Step G: After the application A of the first version is installed on the second device, the application A on the second device starts an application interface.

The application A on the second device may determine, by listening to an application installation broadcast, whether the application A of the first version is installed.

Starting the application interface specifically means starting a specific page (Activity) of the application A.

Step H: The application A on the second device and the application A on the first device are bound to a remote atomic ability service.

If the application A on the second device and the application A on the first device are bound to the remote atomic ability service, it means that a communication channel for distributed collaboration is established between the application A on the second device and the application A on the first device.

For example, the second device may send a channel establishment request to the first device, to request to bind the remote atomic ability service to the application A on the first device.

Step I: The application A on the second device performs data transmission with the application A on the first device by using the bound remote atomic ability service.

In the solution provided in Embodiment 2 of this application, the first device and the second device may be based on the software architecture shown in FIG. 2 or similar to that shown in FIG. 2. When there is a requirement for distributed collaboration, the cross-device communication channel between the second device and the first device is established through push collaboration, and highly efficient and highly secure cross-device communication can be implemented based on the communication channel. In addition, application scenarios of distributed collaborative display can be enriched by establishing the communication channel, so as to implement cross-device communication with high compatibility, a low workload, and low difficulty, thereby expanding a distributed ecological scope and improving user experience.

It should be understood that the solutions in embodiments of this application may be properly combined for use, and explanations or descriptions of terms in embodiments may be cross-referenced or explained in embodiments. This is not limited.

It should be further understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

It may be understood that, to implement functions in any one of the foregoing embodiments, an electronic device (for example, the first node and the second node) includes a corresponding hardware structure and/or software module for performing each function. A person skilled in the art should be easily aware that, in combination with units and algorithm steps of the examples described in embodiments disclosed in this specification, this application may be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, an electronic device (for example the first device and the second device may be divided into functional modules. For example, the functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

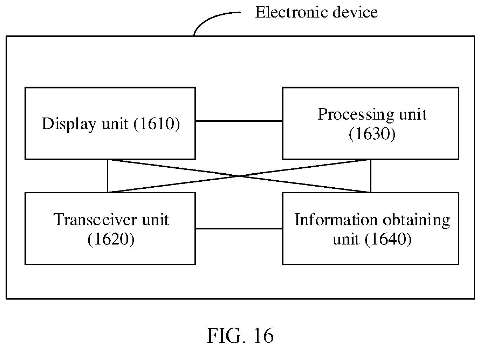

For example, when each functional module is obtained through division in an integrated manner, FIG. 16 is a block diagram of a structure of an electronic device according to an embodiment of this application. As shown in FIG. 16, the electronic device may include a display unit 1610, a transceiver unit 1620, and a processing unit 1630.

Further, as shown in FIG. 16, the electronic device may further include an information obtaining unit 1640.

In some embodiments, when the electronic device is a first device, the display unit 1610 is configured to: when a first operation of a user is received, display first information that includes device information of the first device and application information of a first application; and after a communication channel for collaborative display is successfully established, collaboratively display the first application with a second device; and/or is configured to perform another process of the technology described in this specification. The transceiver unit 1620 is configured to receive a channel establishment request from the second device; and/or is configured to perform another process of the technology described in this specification. The processing unit 1630 is configured to: in response to the channel establishment request of the second device that is received by the transceiver unit, establish the communication channel for collaborative display with the second device; and/or is configured to perform another process of the technology described in this specification.

When the electronic device is the second device, the information obtaining unit 1640 is configured to obtain the first information that includes the device information of the first device and the application information of the first application; and/or is configured to perform another process of the technology described in this specification. The processing unit 1630 is configured to determine that the first application is installed on the second device; and/or is configured to perform another process of the technology described in this specification. The transceiver unit 1620 is configured to send a channel establishment request to the first device based on the device information of the first device, to request to establish the communication channel for collaborative display with the first device; and/or is configured to perform another process of the technology described in this specification. The display unit 1610 is configured to: after the communication channel for collaborative display is successfully established, collaboratively display the first application with the first device; and/or is configured to perform another process of the technology described in this specification.

In some other embodiments, when the electronic device is the first device, the information obtaining unit 1640 is configured to obtain information about a distributed device in response to receiving a first operation of a user; and/or is configured to perform another process of the technology described in this specification. The processing unit 1630 is configured to: determine, based on the information about the distributed device, the second device used to collaboratively display the first application with the first device; and in response to a channel establishment request received by the transceiver unit from the second device, establish the communication channel for collaborative display with the second device; and/or is configured to perform another process of the technology described in this specification. The transceiver unit 1620 is configured to send, to the second device, a push collaboration request that carries the application information of the first application; and receive a channel establishment request from the second device; and/or is configured to perform another process of the technology described in this specification. The display unit 1610 is configured to synchronously display the interface of the first application with the second device by using a communication channel for collaborative display; and/or is configured to perform another process of the technology described in this specification.

When the electronic device is the second device, the transceiver unit 1620 is configured to: receive, from the first device, a push collaboration request that carries the application information of the first application; and send, to the first device, a channel establishment request used to request to establish the communication channel for collaborative display with the first device; and/or is configured to perform another process of the technology described in this specification. The processing unit 1630 is configured to determine that the first application is installed on the second device; and/or is configured to perform another process of the technology described in this specification. The display unit 1610 is configured to: after the communication channel for collaborative display is successfully established, synchronously display an interface of the first application with the first device by using the communication channel for collaborative display; and/or or is configured to perform another process of the technology described in this specification.

It should be noted that the transceiver unit 1620 may include a radio frequency circuit. Specifically, the electronic device (for example, the first device or the second device) may receive and send a radio signal by using the radio frequency circuit. The radio frequency circuit usually includes but is not limited to an antenna, at least one amplifier, a transceiver, a coupler, a low noise amplifier, a duplexer, or the like. In addition, the radio frequency circuit may further communicate with another device through wireless communication. The wireless communication may use any communication standard or protocol, including but not limited to a global system for mobile communications, general packet radio service, code division multiple access, wideband code division multiple access, Long Term Evolution, email, short message service, or the like.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an electronic device or a cloud server. Certainly, the processor and the storage medium may be located in the electronic device or the cloud server as discrete components.

The foregoing descriptions about implementations allow a person skilled in the art to understand that, for the purpose of convenient and brief description, division into the foregoing functional modules is used as an example for illustration. In actual application, the foregoing functions can be allocated to different modules and implemented according to a requirement, that is, an inner structure of an apparatus is divided into different functional modules to implement all or a part of the functions described above.

In an optional manner, this application provides a communication system. The communication system includes a first device and a second device. The first device and the second device are configured to implement the method according to any one of the possible implementations provided in this application.

In an optional manner, this application provides a chip system. The chip system includes a processor and a memory. The memory stores instructions. When the instructions are executed by the processor, the method according to any one of the possible implementations provided in this application is implemented. The chip system may include a chip, or may include a chip and another discrete component.

In the several embodiments provided in this application, it should be understood that the disclosed electronic device, cloud server, and method may be implemented in other manners. For example, the foregoing apparatus embodiments are merely examples. For example, division of the modules or units is merely logical function division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or the units may be implemented in electrical, mechanical, or other forms.

The units described as separate parts may or may not be physically separate, and parts displayed as units may be one or more physical units, may be located in one place, or may be distributed in different places. All or a part of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to a conventional technology, or all or a part of the technical solutions may be implemented in the form of a software product. The software product is stored in a storage medium and includes several instructions for indicating a device (which may be a single-chip microcomputer, a chip, or the like) or a processor (processor) to perform all or a part of the steps of the methods described in embodiments of this application. The foregoing storage medium includes any medium that can store program code, like a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A distributed cross-device collaboration method, wherein the method comprises:
displaying, by a first device, first information when receiving a first operation of a user, wherein the first information comprises device information of the first device and application information of a first application, and the application information of the first application is used by a second device to determine that the first application is installed on the second device;
in response to receiving a channel establishment request of the second device, establishing, by the first device, a communication channel for collaborative display with the second device, wherein the device information of the first device is used to perform security verification when the first device establishes the communication channel for collaborative display with the second device; and
collaboratively displaying, by the first device, the first application with the second device by using the communication channel for collaborative display.

2. The method according to claim 1, wherein
the first operation comprises an operation of triggering, by the user, display of a collaboration code, and the first device displays the first information in a form of the collaboration code.

3. The method according to claim 2, wherein the collaboration code comprises a collaboration QR code and a collaboration barcode.

4. The method according to any one of claims 1 to 3, wherein the application information of the first application is specifically used by the second device to determine that the first application of a first version is installed on the second device, and the first application of the first version supports an application router service, wherein supporting the application router service means having a capability of performing collaborative display by using the communication channel for collaborative display.

5. The method according to any one of claims 1 to 3, wherein the collaboratively displaying, by the first device, the first application with the second device by using the communication channel for collaborative display comprises:
synchronously displaying, by the first device, an interface of the first application with the second device by using the communication channel for collaborative display.

6. The method according to any one of claims 1 to 5, wherein the collaboratively displaying, by the first device, the first application with the second device by using the communication channel for collaborative display comprises:
controlling, by the second device by using the communication channel for collaborative display, the first device to display an application interface of the first application, wherein
the first device displays the interface of the first application, and the second device displays a control interface of the first application.

7. The method according to any one of claims 1 to 6, wherein the first operation comprises any one of the following:
an operation of tapping, by the user, a virtual button that is on the interface of the first application and that is used to display a collaboration code;
a preset pressing operation performed by the user on a physical button of the first device when the first device displays the interface of the first application;
a preset gesture operation performed by the user on a touchscreen of the first device when the first device displays the interface of the first application;
an operation of holding, by the user, the second device to "tap" the first device when the first device displays the interface of the first application;
an operation of holding, by the user, the second device to approach the first device when the first device displays the interface of the first application; and
an operation of "shaking", by the user, the first device and the second device at the same time when the first device displays the interface of the first application.

8. A distributed cross-device collaboration method, wherein the method comprises:
obtaining, by a second device, first information, wherein the first information comprises device information of a first device and application information of a first application, and the first application runs on the first device;
determining, by the second device, that the first application is installed on the second device;
sending, by the second device, a channel establishment request to the first device based on the device information of the first device, to request to establish a communication channel for collaborative display with the first device; and
collaboratively displaying, by the second device, the first application with the first device after the communication channel for collaborative display is successfully established.

9. The method according to claim 8, wherein the obtaining, by a second device, first information comprises:
obtaining, by the second device, the first information by scanning a collaboration code displayed on the first device, wherein the collaboration code comprises the first information; or
receiving, by the second device, the first information from the first device;

10. The method according to claim 8 or 9, wherein the application information of the first application is specifically used by the second device to determine that the first application of a first version is installed on the second device; and
the determining, by the second device, that the first application is installed on the second device specifically comprises:
determining, by the second device, that the first application of the first version is installed on the second device, wherein the first application of the first version supports an application router service, and supporting the application router service means having a capability of performing collaborative display by using the communication channel for collaborative display.

11. The method according to any one of claims 8 to 10, wherein the collaboratively displaying, by the second device, the first application with the first device comprises:
synchronously displaying, by the first device, an interface of the first application with the second device by using the communication channel for collaborative display.

12. The method according to any one of claims 8 to 10, wherein the collaboratively displaying, by the second device, the first application with the first device comprises:
controlling, by the second device by using the communication channel for collaborative display, the first device to display an application interface of the first application, wherein
the first device displays the interface of the first application, and the second device displays a control interface of the first application.

13. A distributed cross-device collaboration method, wherein the method comprises:
in response to receiving a first operation of a user, obtaining, by a first device, information about a distributed device;
determining, by the first device, a second device based on the information about the distributed device, wherein the second device is configured to collaboratively display a first application with the first device;
sending, by the first device, a push collaboration request to the second device, wherein the push collaboration request carries application information of the first application, and the application information of the first application is used by the second device to determine that the first application is installed on the second device;
in response to receiving a channel establishment request of the second device, establishing, by the first device and the second device, a communication channel for collaborative display; and
synchronously displaying, by the first device, an interface of the first application with the second device by using the communication channel for collaborative display.

14. The method according to claim 13, wherein
the distributed device comprises one or more of the following: a device located in a same local area network as the first device, a device that establishes a Bluetooth or Wi-Fi Direct connection to the first device, a device that touches the first device, a device whose distance from the first device is less than a preset threshold, and a device that "shakes" with the first device at the same time.

15. The method according to claim 13 or 14, wherein
the second device is a device that is in the distributed devices and that touches the first device, a device that "shakes" with the first device at the same time, or a device closest to the first device.

16. The method according to claim 13 or 14, wherein the determining, by the first device, a second device based on the information about the distributed device specifically comprises:
determining, by the first device, the second device from the distributed devices based on the information about the distributed device with reference to one or more of the following information:
an illumination status of a screen of the distributed device;
a distance between a plurality of distributed devices and the first device; and
historical information of distributed collaboration of the second device.

17. The method according to any one of claims 13 to 16, wherein the application information of the first application comprises an earliest version of the first application that is expected by the first device, the first application information is specifically used by the second device to determine that the first application of the first version is installed on the second device, and the first application of the first version supports an application router service, wherein supporting the application router service means having a capability of performing collaborative display by using the communication channel for collaborative display.

18. The method according to any one of claims 13 to 17, wherein the first operation comprises any one of the following:
an operation of tapping, by the user, a virtual button used to perform push collaboration on an interface of the first application;
a preset pressing operation performed by the user on a physical button of the first device when the first device displays the interface of the first application;
a preset gesture operation performed by the user on a touchscreen of the first device when the first device displays the interface of the first application;
an operation of holding, by the user, the second device to "tap" the first device when the first device displays the interface of the first application;
an operation of holding, by the user, the second device to approach the first device when the first device displays the interface of the first application; and
an operation of "shaking", by the user, the first device and the second device at the same time when the first device displays the interface of the first application.

19. A distributed cross-device collaboration method, wherein the method comprises:
receiving, by a second device, a push collaboration request from a first device, wherein the push collaboration request carries application information of a first application, the first application runs on the first device, and the second device determines that the first application is installed on the second device;
sending, by the second device, a channel establishment request to the first device, wherein the channel establishment request is used to request to establish a communication channel for collaborative display with the first device; and
after the communication channel for collaborative display is successfully established, synchronously displaying, by the second device, an interface of the first application with the first device by using the communication channel for collaborative display.

20. The method according to claim 19, wherein the application information of the first application comprises an earliest version of the first application that is expected by the first device, the application information of the first application is specifically used by the second device to determine that the first application of the first version is installed on the second device, and the first application of the first version supports an application router service, wherein supporting the application router service means having a capability of performing collaborative display by using the communication channel for collaborative display.

21. A first device, wherein the first device comprises:
a memory, configured to store a computer program;
a transceiver, configured to receive or send a radio signal; and
a processor, configured to execute the computer program, to enable the first device to implement the method according to any one of claims 1 to 7 or 13 to 18.

22. A second device, wherein the second device comprises:
a memory, configured to store a computer program;
a transceiver, configured to receive or send a radio signal; and
a processor, configured to execute the computer program, to enable the second device to implement the method according to any one of claims 8 to 12 or 19 and 20.

23. A communication system, wherein the communication system comprises:
the first device according to claim 21, and
the second device according to claim 22.

24. A computer-readable storage medium, wherein the computer-readable storage medium stores computer program code, and the method according to any one of claims 1 to 7, 8 to 12, 13 to 18, or 19 and 20 is implemented when the computer program code is executed by a processing circuit.

25. A chip system, wherein the chip system comprises a processing circuit and a storage medium, the storage medium stores computer program code, and the method according to any one of claims 1 to 7, 8 to 12, 13 to 18, or 19 and 20 is implemented when the computer program code is executed by the processing circuit.

26. A computer program product, wherein the computer program product is configured to run on a computer, to implement the method according to any one of claims 1 to 7, 8 to 12, 13 to 18, or 19 and 20.
